(19) Europäisches Patentamt
European Patent Office
Office européen des brevets

(11) **EP 3 437 372 B1**

(12) **EUROPEAN PATENT SPECIFICATION**

(45) Date of publication and mention
of the grant of the patent:
**02.09.2020 Bulletin 2020/36**

(51) Int Cl.:
***H04W 36/00*** *(2009.01)*      *H04W 76/28* *(2018.01)*
***H04W 84/00*** *(2009.01)*

(21) Application number: **17720290.0**

(22) Date of filing: **31.03.2017**

(86) International application number:
**PCT/US2017/025433**

(87) International publication number:
**WO 2017/173303 (05.10.2017 Gazette 2017/40)**

(54) **MEASUREMENT ENHANCEMENT IN HIGH SPEED COMMUNICATION**

MESSUNGSVERBESSERUNG BEI DER HOCHGESCHWINDIGKEITSKOMMUNIKATION

AMÉLIORATION DE MESURE EN COMMUNICATION À GRANDE VITESSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.04.2016 US 201662316971 P
13.05.2016 US 201662336425 P**

(43) Date of publication of application:
**06.02.2019 Bulletin 2019/06**

(73) Proprietor: **Intel IP Corporation
Santa Clara, CA 95054 (US)**

(72) Inventors:
• **HUANG, Rui
Beijing
Heilongjiang 100085 (CN)**
• **TANG, Yang
Pleasanton
California 94588 (US)**
• **TIAN, Shuang
Santa Clara
California 95054 (US)**

(74) Representative: **Lang, Johannes et al
Bardehle Pagenberg Partnerschaft mbB
Patentanwälte, Rechtsanwälte
Prinzregentenplatz 7
81675 München (DE)**

(56) References cited:
EP-A2- 2 816 839      WO-A1-2016/004627
GB-A- 2 493 290       US-A1- 2014 146 794
US-A1- 2014 335 865

• **CMCC: "Discussion on enhancing RRM
requirements for high speed scenario", 3GPP
DRAFT; R4-160541, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE , vol. RAN WG4, no. Malta;
20160215 - 20160219 14 February 2016
(2016-02-14), XP051056931, Retrieved from the
Internet:
URL:http://www.3gpp.org/ftp/Meetings_3GPP_
SYNC/RAN4/Docs/ [retrieved on 2016-02-14]**

## Description

## BACKGROUND

Wireless mobile communication technology uses various standards and protocols to transmit data between a node (e.g., a transmission station) and a wireless device (e.g., a mobile device). Standards and protocols that use orthogonal frequency-division multiplexing (OFDM) for signal transmission include the third generation partnership project (3GPP) long term evolution (LTE), the Institute of Electrical and Electronics Engineers (IEEE) 802.16 standard (e.g., 802.16e, 802.16m), which is commonly known to industry groups as WiMAX (Worldwide interoperability for Microwave Access), and the IEEE 802.11 standard, which is commonly known to industry groups as WiFi.

In 3GPP radio access network (RAN) LTE systems (e.g., Release 13 and earlier), the node can be a combination of Evolved Universal Terrestrial Radio Access Network (E-UTRAN) Node Bs (also commonly denoted as evolved Node Bs, enhanced Node Bs, eNodeBs, or eNBs), or new generation Node B (gNB), which communicates with the wireless device, known as a user equipment (UE). The downlink (DL) transmission can be a communication from the node (e.g., eNodeB) to the wireless device (e.g., UE), and the uplink (UL) transmission can be a communication from the wireless device to the node.

In LTE, data can be transmitted from the eNodeB to the UE via a physical downlink shared channel (PDSCH). A physical uplink control channel (PUCCH) can be used to acknowledge that data was received. Downlink and uplink channels or transmissions can use time-division duplexing (TDD) or frequency-division duplexing (FDD).

Document US2014/0335865 discloses a method of mobility management in high speed railway, comprising: identifying whether a User Equipment (UE) is a high speed railway UE; if the UE is identified as a high speed railway UE, obtaining a high speed railway neighbour cell list for the UE, wherein the high speed railway neighbour cell list only includes high speed railway cells; and triggering a fast and earlier cell reselection, or cell handover, or both. This improves the mobility handling for high speed railway UEs; decreased dropping risk and better user experienced performance are also provided.

Document WO2016/004627 discloses a process of handing over an UE from a serving cell to a target cell without participation of the UE, where the same PCI is configured for both the serving and the target cells. The method is applied to a line along a high-speed railway. Specifically, the same PCI is configured for consecutive cells in the line along the high-speed railway. Therefore, when the UE is on the high-speed railway, a fast handover between cells may be implemented, so that a service of the UE is not affected, and good operation experience is brought to a user.

Document US 2014/0146794 discloses an apparatus, method and computer program product to implement techniques including accessing mobility priority information of a user equipment and adjusting the mobility priority of the user equipment by applying one or more rules to the mobility priority information based on speed of the user equipment.

Document CMCC: "Discussion on enhancing RRM requirements for high speed scenario", 3GPP DRAFT; R4-160541, vol. RAN WG4, no. Malta; 14 February 2016 URL:http://www.3gpp.org/ftp/Meetings_3GPP_SYNC/RAN4/Docs discloses minutes from several 3GPP meetings on the RAN4 portion.

Document GB 2493290 discloses a wireless device which receives an upper limit from a network entity which indicates a maximum number of neighbour cells to be monitored.

## Summary

The present invention provides an apparatus of a user equipment as defined by independent claim 1, an apparatus of an evolved node B as defined by independent claim 5 and a machine readable storage medium as defined by independent claim 9.

## BRIEF DESCRIPTION OF THE DRAWINGS

Features and advantages of the disclosure will be apparent from the detailed description which follows, taken in conjunction with the accompanying drawings, which together illustrate, by way of example, features of the disclosure; and, wherein:

FIG. 1 provides a diagram of an example two-path channel model for a UE that is moving at a high speed, in accordance with an example; moving at a high speed, in accordance with an example;

FIG. 2 illustrates a block diagram of an orthogonal frequency division multiple access (OFDMA) frame structure in accordance with an example;

FIG. 3a illustrates a block timing diagram that includes a short discontinuous reception (DRX) cycle, in accordance with an example;

FIG. 3b illustrates a block timing diagram that includes a long DRX cycle, in accordance with an example;

FIG. 4 depicts functionality of an apparatus of a UE operable to operate in a high speed train (HST) environment, in accordance with an example;

FIG. 5 depicts functionality of an apparatus of a eNB operable to operate in a high speed train (HST) environment, in accordance with an example;

FIG. 6 depicts functionality of a machine readable storage medium having instructions embodied thereon for a user equipment (UE) operating in a high speed train (HST) environment, in accordance with an example;

FIG. 7 illustrates an establishment of a new information element and parameter to define the maximum the neighbor cells number should be specified for High Speed Train (HST), in accordance with an example;

FIG. 8 illustrates the establishment of a new parameter to indicate a known target cell ID, in accordance with an example;

FIG. 9 illustrates a table of 90 percentile cell detection delay (in measurement cycle) under high speed scenarios, in accordance with an example;

FIG. 10 illustrates RRC signaling that can be restricted for high speed train (HST), in accordance with an example;

FIG. 11 illustrates a diagram of a wireless device (e.g., UE) and a base station (e.g., eNodeB), in accordance with an example;

FIG. 12 provides an example illustration of a user equipment (UE) device, such as a wireless device, a mobile station (MS), a mobile wireless device, a mobile communication device, a tablet, a handset, or other type of wireless device, in accordance with an example;

FIG. 13 illustrates a diagram of a wireless device (e.g., UE), in accordance with an example; and

FIG. 14 illustrates a diagram of a node (e.g., eNB and/or a Serving GPRS Support Node) and a wireless device (e.g., UE), in accordance with an example.

Reference will now be made to the exemplary embodiments illustrated, and specific language will be used herein to describe the same. It will nevertheless be understood that no limitation of the scope of the technology is thereby intended.

## DETAILED DESCRIPTION

Before the present technology is disclosed and described, it is to be understood that this technology is not limited to the particular structures, process actions, or materials disclosed herein, but is extended to equivalents thereof as would be recognized by those ordinarily skilled in the relevant arts. It should also be understood that terminology employed herein is used for the purpose of describing particular examples only and is not intended to be limiting. The same reference numerals in different drawings represent the same element. Numbers provided in flow charts and processes are provided for clarity in illustrating actions and operations and do not necessarily indicate a particular order or sequence.

## EXAMPLE EMBODIMENTS

Before some embodiments are disclosed and described, it is to be understood that the claimed subject matter is not limited to the particular structures, process operations, or materials disclosed herein, but is extended to equivalents thereof as would be recognized by those ordinarily skilled in the relevant arts. It should also be understood that terminology employed herein is used for the purpose of describing particular examples only and is not intended to be limiting. The same reference numerals in different drawings represent the same element. Numbers provided in flow charts and processes are provided for clarity in illustrating operations and do not necessarily indicate a particular order or sequence.

An initial overview of technology embodiments is provided below and then specific technology embodiments are described in further detail later. This initial summary is intended to aid readers in understanding the technology more quickly, but is not intended to identify key features or essential features of the technology nor is it intended to limit the scope of the claimed subject matter.

Cellular communication systems are evolving to provide seamless service under various user conditions like indoor, outdoor, and mobile environments. Technologies provided in the current disclosure focus on the mobile communication mechanisms to enable efficient operation for mobile users and terminals located in the vehicles traveling at high speeds, such as automobiles traveling on a highway or high speed trains (HSTs). Providing mobile communications service to mobile devices moving at speeds of up to 500km/h speed presents challenges with respect to channel estimation.

The Third Generation Partnership Project (3GPP) has recently created a study item (the High-Speed Train (HST) Study Item (SI)) to identify the new challenges that impact system performance in the HST deployment (3GPP Release 13 "LTE performance enhancement under high speed scenario" SI, RP-142307). The HST SI presents the high-speed train scenario in a single frequency network (SFN) wherein a mobile device such as a User Equipment (UE) presumptively has a wireless connection to a single base station, but the actual downlink signals are transmitted concurrently in a SFN manner from multiple remote radio heads (RRHs) deployed along the train railways. Such SFN deployment with RRHs along high speed train railways is mainly used to resolve radio-resource management issues that may happen due to frequent handovers between different cells.

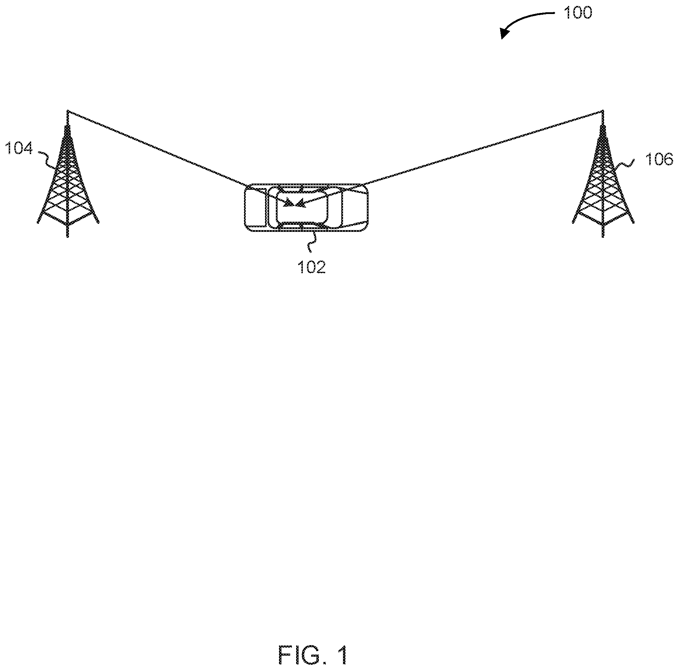

FIG. 1 provides a diagram of an example two-path channel model 100 for a UE that is moving at a high speed. A UE may be located in an automobile 102 that is traveling along a high way between the RRH 104 and the RRH 106 of an SFN that is serving the UE. A simple model of a line of sight (LOS) channel can be depicted with the equations:

$$h_{t=0} = h_1 \cdot e^{j \cdot 2\pi \cdot f_1 \cdot 0} \cdot \delta\left(\tau - \tau_1\right) + h_2 \cdot e^{j \cdot 2\pi \cdot f_2 \cdot 0} \cdot \delta\left(\tau - \tau_2\right)$$

$$h_{t=\Delta T} = h_1 \cdot e^{j \cdot 2\pi \cdot f_1 \cdot \Delta T} \cdot \delta\left(\tau - \tau_1 + \Delta T\right) + h_2 \cdot e^{j \cdot 2\pi \cdot f_2 \cdot \Delta T} \cdot \delta\left(\tau - \tau_2 - \Delta T\right)$$

where $\tau_1$ and $\tau_2$ are arrival timings from RRH 104 and RRH 106, respectively, $f_1, f_2$ are Doppler shifts from the RRH 104 and the RRH 106, respectively, $\Delta T$ is an observation time difference, j is the imaginary number equal to the square root of negative one, e is the base of the natural logarithm, $\pi$ is the ratio of a circle's circumference to the circle's diameter, $\delta$ is the Dirac delta function, ht is a received signal at a time t, h1 is a received signal from the RRH 104, and h2 is a received signal from the RRH 106. If the automobile 102 is directly in between the RRH 104 and the RRH 106, $f_1 = -f_2$. In other words, in the extreme case, the UE 102 experiences two opposite Doppler shifts from the RRH 104 and the RRH 106.

To the UE 102, a channel to the UE 102 can appear as a superposition of $h_1$ and $h_2$. Legacy channel estimation handles this superposition of signals, though, as a single channel propagation from one transmission point. If the carrier frequency used is 3 gigahertz (GHz) and the automobile 102 were replaced by a high speed train traveling at speed of 350 kilometers per hour (km/h), the Doppler shift would be approximately 800 hertz (Hz) for each of the RRHs 104 and 106. Since the Doppler shifts for the RRHs 104 and 106 are in opposite directions, the Doppler spread between the RRHs 104 and 106 can be up to 1.6 kilohertz (KHz). A Doppler spread of this magnitude is significant if 15 KHz subcarrier spacing is assumed.

The UE can compensate for the Doppler shift by manipulating the phase in the frequency domain. In fact, the Doppler shift can be handled as a frequency offset. Secondarily, a channel estimator can address Doppler spread using timing domain interpolation. In either case, though, the UE that is the receiver can execute compensation based on separately estimated channel parameters for each transmission point. Without such separately estimated channel parameters, there is not an immediate way for the UE to make such a compensation.

In a wireless wide area network such as the third generation partnership project (3GPP) long term evolution (LTE) network Release 8-13, the concept of discontinuous reception (DRX) was introduced for saving power. DRX can be used to enable a wireless device, such as a user equipment (UE) in a 3GPP LTE network, to discontinuously monitor a control channel, such as the physical downlink control channel (PDCCH) communicated from a transmission station such as an enhanced NodeB (eNodeB). The discontinuous monitoring can provide significant power savings at the UE since the receiver at the UE can be turned off.

In the current 3GPP specifications, the wireless network is typically designed for speeds up to 350 kilometers per hour (km/h). Predetermined timing parameters that have been selected for speeds below 350 km/h may no longer be adequate as relative speed rates between UEs and eNBs or RRHs increase significantly above 350 km/h

For example, UEs are typically designed to minimize power usage using DRX to power down the UE's transceiver when the UE is not transmitting or receiving data or control information. The timing selected for DRX in the 3GPP standard is based on the UE moving at speeds below 350 km/h. Different approaches to the use of DRX, RRC idle mode, and RRC connected mode are needed for UEs traveling at greater speeds. This will be discussed more fully in the proceeding paragraphs.

**Discontinuous Reception**

Discontinuous reception (DRX) is a process used in wireless communication to reduce power usage on a wireless device and reduce coexistence interference by providing known times for collocated transceivers or receivers to operate with respect to a higher powered transceiver, such as a WWAN transceiver. The WWAN transceiver in a wireless device can communicate with a transmission station, referred to as a network node, to negotiate time periods in which the wireless device will receive communications from the network node. During the negotiated times when information is not received, the wireless device can turn its receiver off and enter a low power state. Discontinuous reception is used in a number of different wireless communication standards, including but not limited to 3GPP LTE Releases 8-13, and the Institute of Electrical and Electronics Engineers (IEEE) 802.11 standard.

In the 3GPP LTE (LTE) standard, a set of functionalities are provided to enable an LTE configured receiver in a UE to perform sleep events. These sleep events may last anywhere from a single millisecond to hundreds of milliseconds or longer. The duration and timing of the sleep events can be negotiated between the UE and the network node. The negotiation may be performed using high level signaling, such as an Open Systems Interconnection (OSI) level 3 communication or another type of high level signaling. One example of an OSI level 3 communication in the 3GPP LTE standard is radio resource control (RRC) signaling. In the LTE standard, RRC signaling is used to control DRX operations at the LTE configured transceiver in the UE.

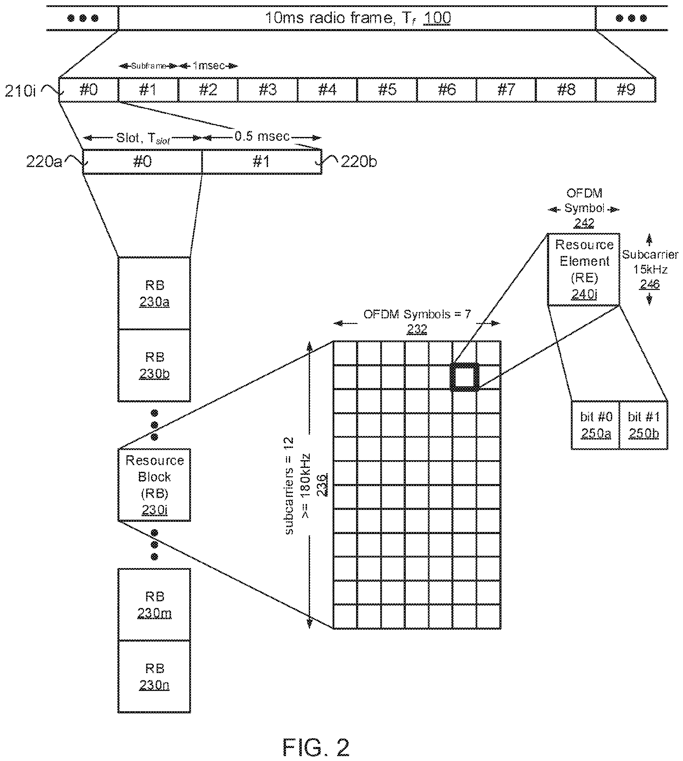

A brief description of the frame structure of the 3GPP LTE standard is provided herein as a reference. FIG. 2 illustrates a downlink radio frame structure type 2. In the example, a radio frame 200 of a signal used to transmit the data can be configured to have a duration, $T_f$, of 10 milliseconds (ms). Each radio frame can be segmented or divided into ten subframes 210i that are each 1 ms long. Each subframe can be further subdivided into two slots 220a and 220b, each with a duration, $T_{slot}$, of 0.5 ms. Each slot for a component carrier (CC) used by the transmitting station and the receiving station can include multiple resource blocks (RBs) 230a, 230b, 230i, 230m, and 230n based on the CC frequency bandwidth. The CC can have a carrier frequency having a bandwidth and center frequency. Each RB (physical RB or PRB) 230i can include 12 - 15 kHz subcarriers 236 (on the frequency axis) and 6 or 7 orthogonal frequency-division multiplexing (OFDM) symbols 232 (on the time axis) per subcarrier. The RB can use seven OFDM symbols if a short or normal cyclic prefix is employed. The RB can use six OFDM symbols if an extended cyclic prefix is used. The resource block can be mapped to 84 resource elements (REs) 240i using short or normal cyclic prefixing, or the resource block can be mapped to 72 REs (not shown) using extended cyclic prefixing. The RE can be a unit of one OFDM symbol 242 by one subcarrier (i.e., 15 kHz) 246. Each RE can transmit two bits 250a and 250b of information in the case of quadrature phase-shift keying (QPSK) modulation. Other types of modulation may be used, such as 16 quadrature amplitude modulation (QAM) or 64 QAM to transmit a greater number of bits in each RE, or bi-phase shift keying (BPSK) modulation to transmit a lesser number of bits (a single bit) in each RE. The RB can be configured for a downlink transmission from the eNodeB to the UE, or the RB can be configured for an uplink transmission from the UE to the eNodeB.

A UE can be set in either an RRC_IDLE or an RRC_CONNECTED state to extend battery life while still guaranteeing a high quality of service (QoS) and connectivity speed. The 3GPP LTE Rel. 13 implementation allows the UE to reduce the amount of time spent monitoring a control channel, such as the PDCCH, for control channel information. Rather than monitoring the PDCCH every transmission time interval (TTI), the UE can monitor the PDCCH only during specific time intervals set through the RRC communication. An Active Time is a time related to DRX operation during which the UE monitors the PDCCH in PDCCH-subframes. This solution can provide benefits in both the downlink and uplink because all of the scheduling control information is transmitted on the PDCCH. During non-active states, the UE can be configured to enter a power saving state that can significantly decrease the power consumption of the LTE configured radio frequency modem at the UE, thereby reducing interference at collocated radios at the UE.

The RRC can be used to manage the use of DRX by setting various parameters. Examples of parameters that can be set in the RRC_CONNECTED state are illustrated in the following table.

| DRX Parameter | Description |
|---|---|
| DRX Cycle | Identifies the periodic repetition of an active period, identified as an "On Duration", followed by a possible period of inactivity. There is a DRX Long cycle and a DRX Short cycle. |

(continued)

| DRX Parameter | Description |
|---|---|
| On Duration timer | Identifies how many subframes the UE is in an active state when a new DRX cycle starts (at the beginning of a DRX cycle). The UE will listen to the PDCCH subframes during this time even if there is no data transfer. |
| DRX Inactivity timer | Identifies for how many consecutive PDCCH subframes the UE is to remain active after successfully decoding a PDCCH. |
| DRX Retransmission timer | Identifies a maximum number of consecutive PDCCH subframes in which the UE should remain active to wait for an incoming retransmission after a first available retransmission time. Can be used for asynchronous HARQ. |
| DRX Short Cycle | Identifies a periodic repetition of an active state when the UE is under a short DRX condition. |
| Short DRX Cycle timer | Specifies a consecutive number of subframes the UE will follow the short DRX cycle after the DRX inactivity timer has expired. |
| UL Retransmission Timer | Identifies number of subframes during which the UE shall monitor PDCCH when an UL grant for retransmission is |
| | expected. Timer is triggered 4 subframes after UL transmission. |
| DL Retransmission Timer | Identifies period during which the UE remains awake when retransmissions are expected on the PDSCH. |

When the network configures DRX for a UE, a value is defined for the DRX Inactivity Timer, referred to in the 3GPP LTE Technical Specification (TS) 36.321 Rel. 13 as a DRX-Inactivity Timer that starts running after each data block has been sent. If new data is sent then the timer is restarted. If still no data is sent when the timer expires then the device can enter a DRX mode with a short DRX cycle. This means that the UE will effectively sleep and awake in a relatively short pattern based on the short DRX cycle. If new data is received then it can be received relatively quickly since the UE only sleeps for short periods. The short DRX cycle mode also has a configurable short DRX cycle timer (i.e. drxShortCycleTimer) attached. Once this timer expires (i.e. no data is received during the short cycle mode), the UE can enter the long DRX cycle. The long DRX cycle can further reduce power usage, but also increases latency time.

During the inactivity periods, the UE may only check the control channels and resources may be assigned. In each DRX cycle (short and long), the RF modem can be turned on for a number of consecutive subframes set by the On Duration timer to listen to the control channel. When data activity is detected, in either the downlink or uplink, the eNodeB triggers the short DRX cycle for the UE, thereby increasing the responsiveness and connectivity of the UE. The transitions between the Long DRX Cycle and the Short DRC cycle may be triggered directly by the eNodeB or determined by a timer.

The inactivity timer can specify the consecutive number of TTIs during which the UE will monitor the PDCCH after successfully decoding a PDCCH indicating an uplink or a downlink data transfer for the UE. The inactivity timer can keep the UE awake for a certain period during data transfer even if the on-duration timer has expired. In a downlink, the inactivity timer is usually triggered within an on-duration period. If the on-duration period is longer, the inactivity timer may start and expire within the awake period. In this example, the inactivity timer will not contribute to the average awake time of the terminal. The inactivity timer may only be triggered for new transmissions in both an uplink and downlink and not for retransmissions.

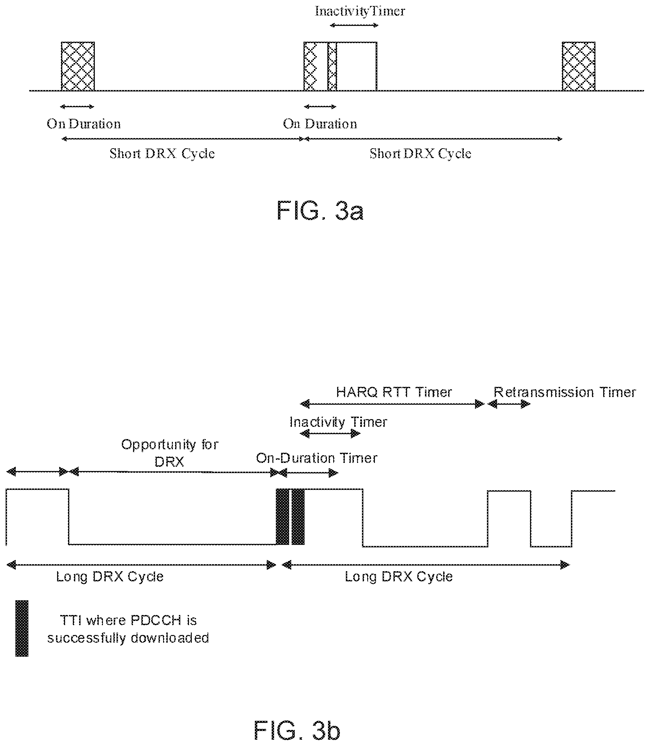

FIG. 3a illustrates one example of DRX parameters. In this example, a short DRX cycle starts at the beginning of an On Duration and ends at the beginning of the next On Duration. An Inactivity Timer is shown overlapping an On Duration, as discussed in the preceding paragraph.

Another DRX feature is related to power saving during HARQ retransmissions. For example, when a UE fails to decode a transport block of a HARQ active process, the UE assumes that the next retransmission will take place after a DRX retransmission timer. This allows the UE to enter a power saving state without the need to listen to the PDCCH.

In the 3GPP LTE specification, a HARQ round trip time (RTT) timer can be started after 1 ms (for decoding delay) of the PDCCH indicating a downlink shared channel (PDSCH) transmission. The HARQ RTT timer can be started for every downlink shared channel transmission.

FIG. 3b illustrates an example of a long DRX cycle. In this example, the long DRX cycle is shown relative to an On-Duration Timer, an overlapping Inactivity Timer, a HARQ RTT timer, and a retransmission timer. The HARQ RTT timer is started after the decoding delay of the PDCCH.

There can be measurement requirements for a UE while it is operating in an RRC_CONNECTED state. For example, in order for handover or cell reselection in an SFN to occur, a UE can measure various attributes of adjacent cells. By performing these measurements, the UE can quickly transition from a serving cell to an adjacent cell that meets certain requirements based on the measurements performed.

In one example, a UE can first determine the identification of a plurality of adjacent cells, which can include the detection of each cell and additionally performing a single measurement on each cell within a measurement period of T Measurement_Period_Intra. If higher layer filtering is used, an additional cell identification delay can be expected. The cells that are monitored can be included in a set that is listed in a measurement object information element for an evolved Universal Mobile Telecommunications System (UMTS) Terrestrial Radio Access (E-UTRA) network information element, referred to as MeasObjectEUTRA..

In principle, the more cells there are that are monitored, the less chance that any of the newly identified cell will quickly become a candidate for cell re-selection. As a result, a longer cell identification delay is needed. In a high speed train (HST) scenario, this additional cell identification delay can be significant, while the UE is traveling at over 350 km/h relative to an eNB. Accordingly, the number of cells to be included in a monitored set may be reduced in a HST scenario. When the number of cells in a monitored set is reduced, any cell that may quickly become a candidate for cell re-selection is likely to already be part of the monitored set.

Therefore, one of most effective network indications to speed up the cell detection in a HST scenario is to limit the number of cells to be measured in a monitored set. The maximum number of cells to be measured in a standard LTE network can be identified with the parameter maximum cells measured (maxCellsMeas). In a high speed train scenario, an explicit parameter can be defined that can limit the number of cells to be measured to a number of cells that is much smaller than a typicaly number of cells in the maxCellsMeas parameter. In one example, the new explicit parameter can be called "maxCellsMeasHST" and included in the *MeasObjectEUTRA* information element. For example, in the legacy network, there is not a restriction on maxCellsMeas which can be as large as 512. However, with usage of the "maxCellsMeasHST" the number of cells can be restricted which can allow for prediction in HST.

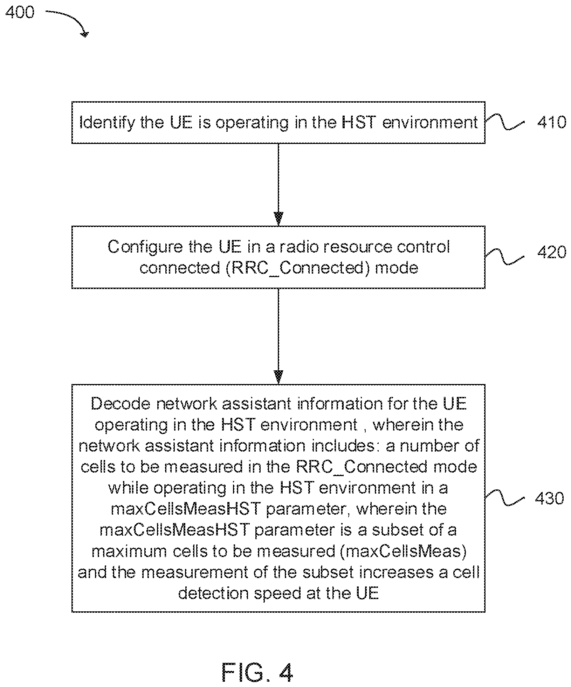

FIG. 4 depicts an example of functionality 400 of an apparatus of a user equipment operable to operate in a high speed train environment. The apparatus of the user equipment comprises one or more processors configured to identify the UE is operating in the HST environment 410. Alternatively, the eNB can receive information from the UE in a HST environment through an event, or automatically as configured. The processors are further configured to configure the UE in a radio resource control connected (RRC_Connected) mode 420. The processors are further configured to decode network assistant information for the UE operating in the HST environment 430. The network assistant information for the UE includes a number of cells to be measured in the RRC_Connected mode while operating in the HST environment in a maxCellsMeasHST parameter. The maxCellsMeasHST parameter is a subset of maximum cells to be measured (maxCellsMeas) and the measurement of the subset increases the cell detection speed at the UE accordingly. Accordingly, in order to speed up the cell detection in HST the network assistant information can be used to indicate the ID of cell in the HST environment. In one instance, where the cell ID is unknown, the UE can search all possible cells without any explicit information of the neighbor cell. In another instance, where the cell ID is known by the network signaling in HST, the list containing total neighbor cells to be measured in HST (e.g. "IntraFreqNeighCellList/InterFreqNeighCellList" and "CellsToAddMod" for RRC_IDLE and RRC_CONNECT status respectively) can be limited. As such, the UE can be initiated to only search cells which are included in the list containing the candidate neighbor cells in HST. In addition the network assistant information can provide assistance to short the cell identification and measurements when there is specific known information provided. The apparatus of the UE further comprises memory coupled to the one or more processors and configured to store the maxCellsMeasHST parameter.

In the present invention, the one or more processors are configured to encode one or more channel quality measurements performed by the UE, for each of the number of cells.

In one embodiment, the one or more channel quality measurements can be comprised of a Reference Signal Receive Quality (RSRQ) measurement, a Reference Signal Receive Power (RSRP) measurement, and a Reference Signal-Signal to Interference Noise Ratio (RS-SINR) measurement. The one or more channel quality measurements can be performed in a time measurement period for intra-frequency cells (Tmeasurement_Period Intra).

In the present invention, a MeasObjectEUTRA information element is comprised of an HST cell identification indicator (cellIDIndHST). The cellIDIndHST is operable to indicate a target cell that the UE will select for handover or cell re-selection.

In the present invention, the cellIDIndHST includes a Boolean to indicate that a detection procedure of a target cell identification (ID) will be skipped to eliminate a time used to search for a physical cell ID (PCID) of the target cell that the UE will select for handover or cell re-selection.

In the present invention, the one or more processors are configured to encode the one or more channel quality measurements in a measurement object EUTRA (MeasObjectEUTRA) information element. In addition, a channel quality result RSRP can be reported in a measurement object result (MeasResult) information element.

In one embodiment, the one or more processors are configured to decode a frequency offset value and a timing offset value based on an estimated Doppler shift received in the MeasObjectEUTRA. In addition, for each of the number of cells associated with the maxCellsMeasHST parameter the synchronization error can be reduced in a handover with one of the number of cells.

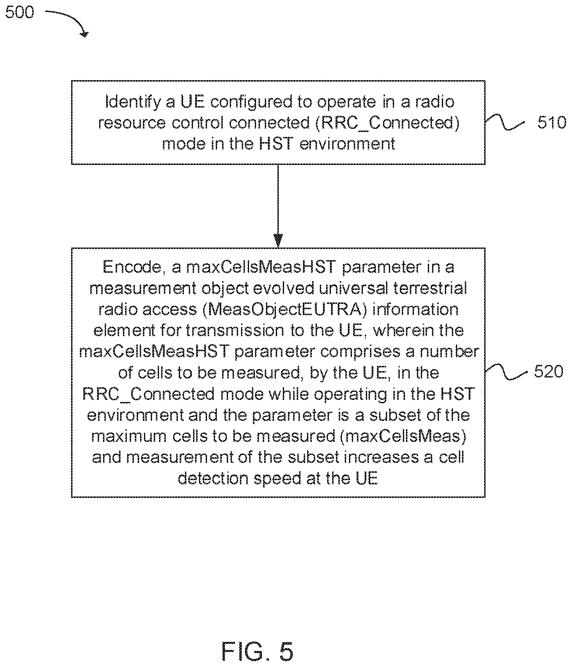

Another example provides functionality 500 of an apparatus of an evolved Node B (eNB) operable to operate in a high speed train environment, as shown in FIG. 5. The apparatus of the eNB comprises one or more processors configured to identify a UE configured to operate in a radio resource control connected (RRC_Connected) mode in the HST environment 510. The one or more processors are further configured to encode a maximum cells measured in an HST environment (maxCellsMeasHST) parameter in a measurement object evolved universal terrestrial radio access (MeasObjectEUTRA) information element for transmission to the UE 520. The maxCellsMeasHST parameter comprises a number of cells to be measured, by the UE, in the RRC Connected mode while operating in the HST environment. The maxCellsMeasHST parameter is a measurement of the subset of a maximum cells to be measured (maxCellsMeas) parameter. The subset increases a cell detection speed at the UE. The apparatus of the eNB further comprises memory coupled to the one or more processors and configured to store the maxCellsMeasHST parameter.

In the present invention, the one or more processors are further configured to decode one or more channel quality measurements received from the UE, for each of the number of cells.

In one embodiment, the one or more channel quality measurements comprises: a Reference Signal Receive Quality (RSRQ), a Reference Signal Receive Power (RSRP), and a Reference Signal-Signal to Interference Noise Ratio (RS-SINR), and the one or more channel quality measurements can be performed in a time measurement period for intra-frequency cells (Tmeasurement_Period Intra).

In the present invention, the MeasObjectEUTRA information element further comprises an HST cell identification indicator (cellIDIndHST) operable to indicate a target cell that the UE will select for handover.

In the present invention, the cellIDIndHST parameter includes a Boolean to indicate that a detection procedure of a target cell identification (ID) will be skipped. This operation is used to eliminate a time used to search for a physical cell ID (PCID) of the target cell that the UE will select for handover.

In the present invention, the one or more processors are further configured to decode the one or more channel quality measurements in a measurement object EUTRA (MeasObjectEUTRA) information element.

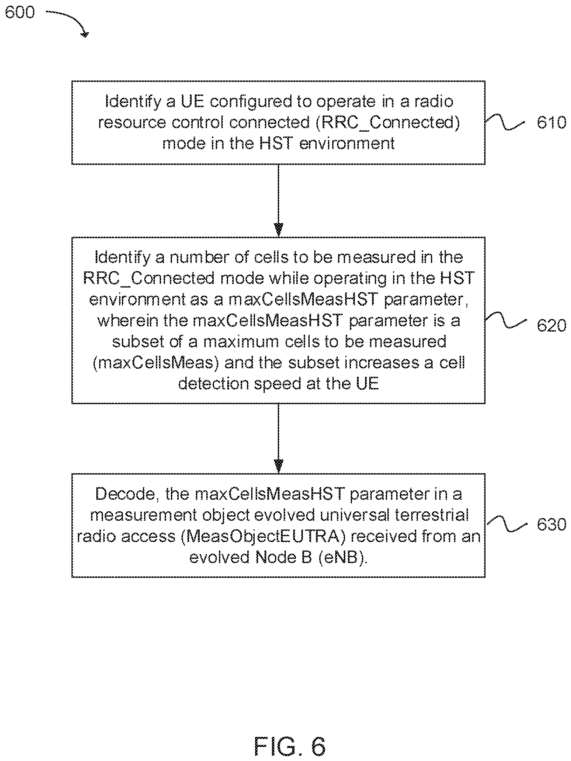

Another example provides at least one machine readable storage medium having instructions 600 embodied thereon for a user equipment (UE) operating in a high speed train (HST), as shown in FIG. 6. The instructions can be executed on a machine, where the instructions are included on at least one computer readable medium or one non-transitory machine readable storage medium. The instructions, when executed, perform identification of a UE configured to operate in a radio resource control connected (RRC_Connected) mode in the HST environment 610. The instructions when executed perform identification of a number of cells to be measured in the RRC Connected mode while operating in the HST environment as a maxCellsMeasHST parameter 620. The maxCellsMeasHST parameter is a subset of a maximum cells to be measured (maxCellsMeas) parameter and the subset increases a cell detection speed at the UE. The instructions when executed perform decoding of a maxCellsMeasHST parameter in a measurement object evolved universal terrestrial radio access (MeasObjectEUTRA) received from an evolved Node B (eNB) 630. The maxCellsMeasHST parameter comprises a number of cells to be measured, by the UE, in the RRC Connected mode while operating in the HST environment. In addition the parameter is a subset of maximum cells to be measured (maxCellsMeas) and the subset increases a cell detection speed at the UE.

In the present invention, the at least one machine readable storage medium further comprises instructions, that when executed by one or more processors at the eNB, encode one or more channel quality measurements performed by the UE, for each of the number of cells.

In another embodiment, the at least one machine readable storage medium can comprise one or more channel quality measurements. These one or more channel quality measurements can comprise a Reference Signal Receive Quality (RSRQ) measurement, a Reference Signal Receive Power (RSRP) measurement, and a Reference Signal-Signal to Interference Noise Ratio (RS-SINR) measurement. The one or more channel quality measurements can be performed in a time measurement period of intra-frequency cells (Tmeasurement_Period Intra).

In the present invention, the at least one machine readable storage medium includes a MeasObjectEUTRA, comprising an HST cell identification indicator (cellIDIndHST) parameter operable to indicate a target cell that the UE will select for handover.

In the present invention, the at least one machine readable storage medium includes a Boolean to indicate that a detection procedure of a target cell identification (ID) will be skipped to eliminate a time used to search for a physical cell ID (PCID) of the target cell that the UE will select for handover.

In the present invention, the at least one machine readable storage medium further comprises instructions, that when executed by one or more processors at the eNB, encode the one or more channel quality measurements in a measurement object EUTRA (MeasObjectEUTRA) information element.

In one embodiment, the at least one machine readable storage medium can further comprise instructions, that when executed by one or more processors at the eNB, can decode a frequency offset value and a timing offset value based on an estimated Doppler shift. The estimated Doppler shift can be received in the MeasObjectEUTRA for each of the number of cells associated with the maxCellsMeasHST parameter to reduce synchronization error in a handover with one of the number of cells.

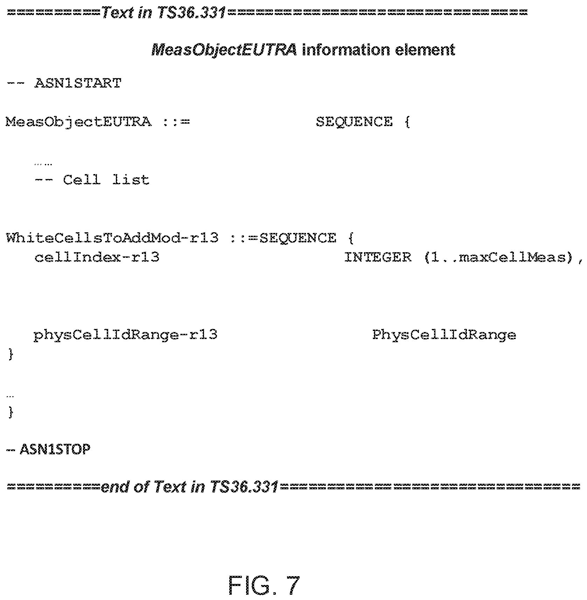

FIG. 7 illustrates an establishment of a new information element and parameter to define the maximum the neighbor cells number should be specified for High Speed Train (HST).

In one embodiment, the information element MeasObjectEUTRA can specify information applicable for intra-frequency or inter-frequency E UTRA cells. In addition, in order to effectively configure the network indication to speed up, the cell detection in HST is limited to the number of cells to be measured in HST, as previously discussed. explicit parameter "maxCellsMeasHST" is specified in the "MeasObjectEUTRA" information element. This value is a subset of, and smaller than the "maxCellsMeas" parameter. As such, the new parameter maxCellsMeasHST is configured to define the maximum number of neighbor cells in a set to be measured in an HST environment for handover or cell re-selection.

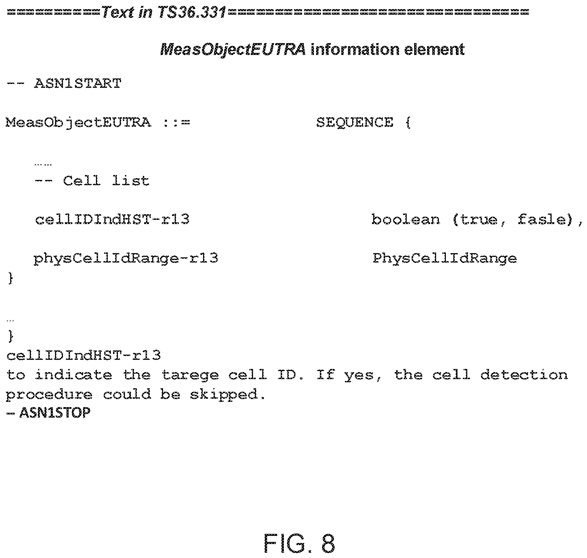

FIG. 8 illustrates the establishment of a new parameter to indicate a known target cell ID in accordance with the present invention. The target cell which the UE will select for handover is known when performing the neighbor cell detection and measurement. Hence, the cell detection time which includes the cell ID detection is skipped. The time to search the physical cell ID (PCID) which is large part of identification, is saved.

In another embodiment, the time to acquire the cell can be saved. In addition, a new parameter to indicate the known target cell ID is configured to be used within an HST environment.

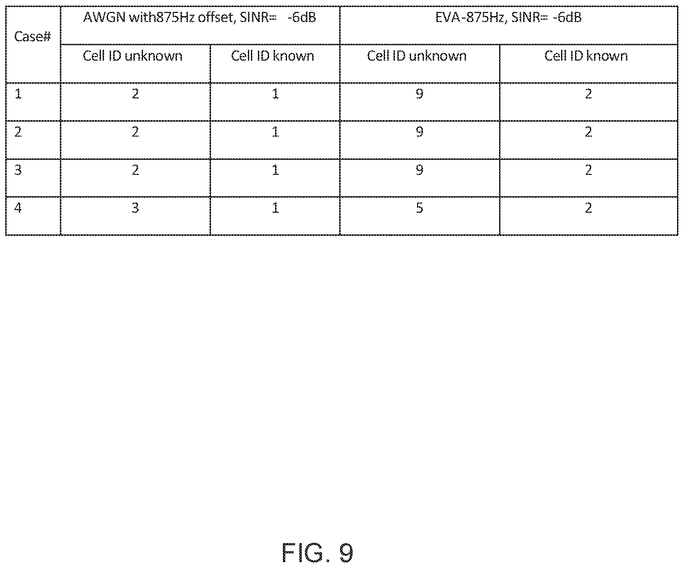

FIG. 9 illustrates a table of 90 percentile cell detection delay (in measurement cycle) under high speed scenarios. The displayed table shows a series of link level simulations. In these link level simulations, the cell detection time is denoted as "x" measurement cycles. Hereby for a DRX case, it is reasonable to assume the time unit is a DRX cycle.

Thus, based on the simulation results in FIG. 9, we can see that the total cell identification delay could be significantly reduced if the ID of a candidate cell is known. The network assistant information in HST can be the limited neighbor cell list (e.g. "IntraFreqNeighCellList/InterFreqNeighCellList" and "CellsToAddMod" for RRC_IDLE and RRC_CONNECT status respectively) and the UE can search the cells only within these limited neighbor cell list.

In one embodiment, information from the FIG. 9 table can be conveyed by network signaling. This information can include network assistant information which can be used to enhance radio resource management (RRM) in HST. The information can comprise the limited neighbor cell list, and an indication that the UE need only measure the cell in the limited neighbor cell list in HST.

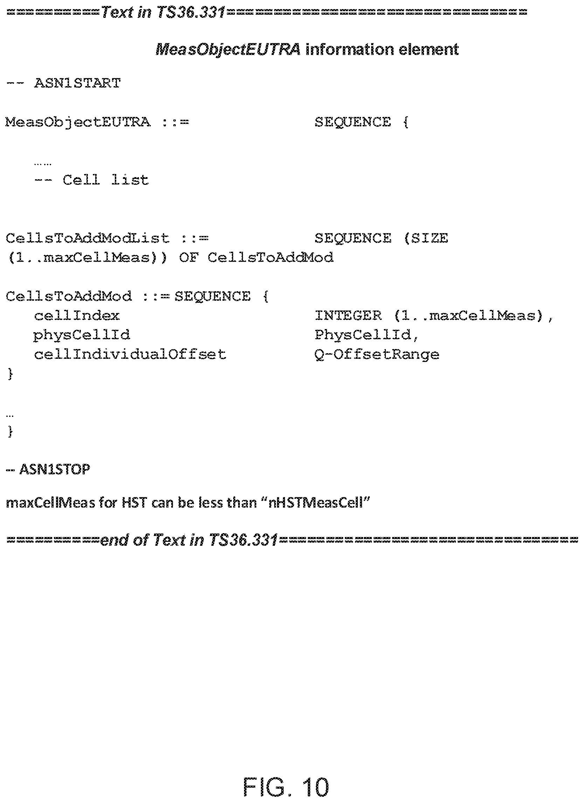

FIG. 10 illustrates RRC signaling that can be restricted for a high speed train (HST). In the present invention, a maxCellMeas parameter for HST is incorporated along with a maxCellMeas parameter, for a standard operating environment, in order to assist with restriction of RRC signaling for HST. The measurement performed can be where maxCellMeas for HST can be less than maxCellMeas for a standard operating environment.

In one embodiment, in order to avoid too many cells from being searched in HST, the UE measurement requirements on the cell identification in HST can be defined as E-UTRAN intra frequency measurements for HST and E-UTRAN inter frequency measurements for HST. In E-UTRAN intra frequency measurements for HST, the UE can identify new intra-frequency cells and perform RSRP measurements of identified intra-frequency cells with an explicit intra-frequency neighbor cell list containing physical layer cell identities. During the RRC_CONNECTED state, the UE can continuously measure identified intra frequency cells and additionally search for and identify new intra frequency cells.

In another embodiment the measurement period for intra-frequency measurements in RRC_Connected state is 200 ms. When no measurement gaps are activated, the UE can be capable of performing RSRP, RSRQ, and RS-SINR measurements for 8 identified-intra-frequency cells, and the UE physical layer can be capable of reporting measurements to higher layers within the measurement period of 200 ms. When measurement gaps are activated, the UE can be capable of performing measurements for at least $T_{measurement}$ intra cells, where $T_{measurement}$ intra is defined.

If the UE has identified more than $T_{measurement}$ intra cells, the UE can perform measurements of at least 8 identified intra- frequency cells but the reporting rate of RSRP, RSRQ, and RS-SINR measurements of cells from UE physical layer to higher layers may be decreased.

In another embodiment, in E-UTRAN inter frequency measurements for HST, the UE can be able to identify new inter-frequency cells and perform RSRP and RSRQ measurements of identified inter-frequency cells if carrier frequency information is provided by the Primary Cell (PCell), if an explicit neighbor list with physical layer cell identities is provided.

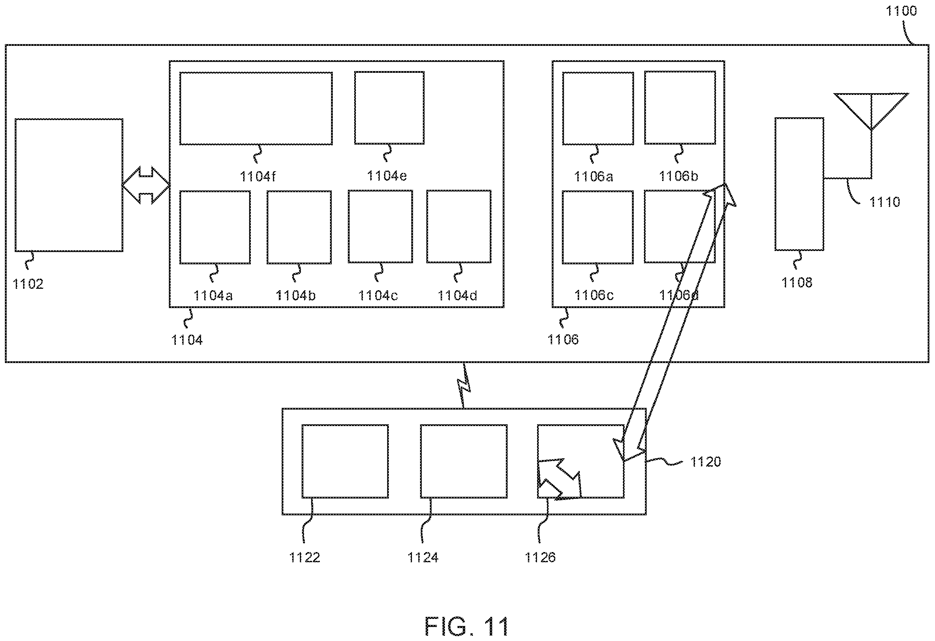

FIG. 11 provides an example illustration of a user equipment (UE) device 1100 and a node 1120. The UE device 1100 can include a wireless device, a mobile station (MS), a mobile wireless device, a mobile communication device, a tablet, a handset, or other type of wireless device. The UE device 1100 can include one or more antennas configured to communicate with the node 1120 or transmission station, such as a base station (BS), an evolved Node B (eNB), a baseband unit (BBU), a remote radio head (RRH), a remote radio equipment (RRE), a relay station (RS), a radio equipment (RE), a remote radio unit (RRU), a central processing module (CPM), or other type of wireless wide area network (WWAN) access point. The node 1120 can include one or more processors 1122, memory 1124 and a transceiver 1126. The UE device 1100 can be configured to communicate using at least one wireless communication standard including 3GPP LTE, WiMAX, High Speed Packet Access (HSPA), Bluetooth, and WiFi. The UE device 1100 can communicate using separate antennas for each wireless communication standard or shared antennas for multiple wireless communication standards. The UE device 1100 can communicate in a wireless local area network (WLAN), a wireless personal area network (WPAN), and/or a WWAN.

In some embodiments, the UE device 1100 may include application circuitry 1102, baseband circuitry 1104, Radio Frequency (RF) circuitry 1106, front-end module (FEM) circuitry 1108 and one or more antennas 1110, coupled together at least as shown. In addition, the node 1120 may include, similar to that described for the UE device 1100, application circuitry, baseband circuitry, Radio Frequency (RF) circuitry, front-end module (FEM) circuitry and one or more antennas.

The application circuitry 1102 may include one or more application processors. For example, the application circuitry 1102 may include circuitry such as, but not limited to, one or more single-core or multi-core processors. The processor(s) may include any combination of general-purpose processors and dedicated processors (e.g., graphics processors, application processors, etc.). The processors may be coupled with and/or may include a storage medium, and may be configured to execute instructions stored in the storage medium to enable various applications and/or operating systems to run on the system.

The baseband circuitry 1104 may include circuitry such as, but not limited to, one or more single-core or multi-core processors. The baseband circuitry 1104 may include one or more baseband processors and/or control logic to process baseband signals received from a receive signal path of the RF circuitry 1106 and to generate baseband signals for a transmit signal path of the RF circuitry 1106. Baseband processing circuity 1104 may interface with the application circuitry 1102 for generation and processing of the baseband signals and for controlling operations of the RF circuitry 1106. For example, in some embodiments, the baseband circuitry 1104 may include a second generation (2G) baseband processor 1104a, third generation (3G) baseband processor 1104b, fourth generation (4G) baseband processor 1104c, and/or other baseband processor(s) 1104d for other existing generations, generations in development or to be developed in the future (e.g., fifth generation (5G), 6G, etc.). The baseband circuitry 1104 (e.g., one or more of baseband processors 1104a-d) may handle various radio control functions that enable communication with one or more radio networks via the RF circuitry 1106. The radio control functions may include, but are not limited to, signal modulation/demodulation, encoding/decoding, radio frequency shifting, etc. In some embodiments, modulation/demodulation circuitry of the baseband circuitry 1104 may include Fast-Fourier Transform (FFT), precoding, and/or constellation mapping/demapping functionality. In some embodiments, encoding/decoding circuitry of the baseband circuitry 1104 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 1104 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 1104e of the baseband circuitry 1104 may be configured to run elements of the protocol stack for signaling of the PHY, MAC, RLC, PDCP and/or RRC layers. In some embodiments, the baseband circuitry may include one or more audio digital signal processor(s) (DSP) 1104f. The audio DSP(s) 104f may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 1104 and the application circuitry 1102 may be implemented together such as, for example, on a system on a chip (SOC).

In some embodiments, the baseband circuitry 1104 may provide for communication compatible with one or more radio technologies. For example, in some embodiments, the baseband circuitry 1104 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 1104 is configured to support radio communications of more than one wireless protocol may be referred to as multi-mode baseband circuitry.

The RF circuitry 1106 may enable communication with wireless networks using modulated electromagnetic radiation through a non-solid medium. In various embodiments, the RF circuitry 1106 may include switches, filters, amplifiers, etc. to facilitate the communication with the wireless network. RF circuitry 1106 may include a receive signal path which may include circuitry to down-convert RF signals received from the FEM circuitry 1108 and provide baseband signals to the baseband circuitry 1104. RF circuitry 1106 may also include a transmit signal path which may include circuitry to up-convert baseband signals provided by the baseband circuitry 1104 and provide RF output signals to the FEM circuitry 1108 for transmission.

In some embodiments, the RF circuitry 1106 may include a receive signal path and a transmit signal path. The receive signal path of the RF circuitry 1106 may include mixer circuitry 1106a, amplifier circuitry 1106b and filter circuitry 1106c. The transmit signal path of the RF circuitry 1106 may include filter circuitry 1106c and mixer circuitry 1106a. RF circuitry 1106 may also include synthesizer circuitry 1106d for synthesizing a frequency for use by the mixer circuitry 1106a of the receive signal path and the transmit signal path. In some embodiments, the mixer circuitry 1106a of the receive signal path may be configured to down-convert RF signals received from the FEM circuitry 1108 based on the synthesized frequency provided by synthesizer circuitry 1106d. The amplifier circuitry 1106b may be configured to amplify the down-converted signals and the filter circuitry 1106c may be a low-pass filter (LPF) or band-pass filter (BPF) configured to remove unwanted signals from the down-converted signals to generate output baseband signals. Output baseband signals may be provided to the baseband circuitry 1104 for further processing. In some embodiments, the output baseband signals may be zero-frequency baseband signals, although this is not a necessity. In some embodiments, mixer circuitry 1106a of the receive signal path may comprise passive mixers, although the scope of the embodiments is not limited in this respect.

In some embodiments, the mixer circuitry 1106a of the transmit signal path may be configured to up-convert input baseband signals based on the synthesized frequency provided by the synthesizer circuitry 1106d to generate RF output signals for the FEM circuitry 1108. The baseband signals may be provided by the baseband circuitry 1104 and may be filtered by filter circuitry 1106c. The filter circuitry 1106c may include a low-pass filter (LPF), although the scope of the embodiments is not limited in this respect.

In some embodiments, the mixer circuitry 1106a of the receive signal path and the mixer circuitry 1106a of the transmit signal path may include two or more mixers and may be arranged for quadrature down-conversion and/or up-conversion respectively. In some embodiments, the mixer circuitry 1106a of the receive signal path and the mixer circuitry 1106a of the transmit signal path may include two or more mixers and may be arranged for image rejection (e.g., Hartley image rejection). In some embodiments, the mixer circuitry 1106a of the receive signal path and the mixer circuitry 1106a may be arranged for direct down-conversion and/or direct up-conversion, respectively. In some embodiments, the mixer circuitry 1106a of the receive signal path and the mixer circuitry 1106a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 1106 may include analog-to-digital converter (ADC) and digital-to-analog converter (DAC) circuitry and the baseband circuitry 1104 may include a digital baseband interface to communicate with the RF circuitry 1106.

In some dual-mode embodiments, a separate radio IC circuitry may be provided for processing signals for each spectrum, although the scope of the embodiments is not limited in this respect.

In some embodiments, the synthesizer circuitry 1106d may be a fractional-N synthesizer or a fractional N/N+1 synthesizer, although the scope of the embodiments is not limited in this respect as other types of frequency synthesizers may be suitable. For example, synthesizer circuitry 1106d may be a delta-sigma synthesizer, a frequency multiplier, or a synthesizer comprising a phase-locked loop with a frequency divider.

The synthesizer circuitry 1106d may be configured to synthesize an output frequency for use by the mixer circuitry 1106a of the RF circuitry 1106 based on a frequency input and a divider control input. In some embodiments, the synthesizer circuitry 1106d may be a fractional N/N+1 synthesizer.

In some embodiments, frequency input may be provided by a voltage controlled oscillator (VCO), although that is not a necessity. Divider control input may be provided by either the baseband circuitry 1104 or the applications processor 1102 depending on the desired output frequency. In some embodiments, a divider control input (e.g., N) may be determined from a look-up table based on a channel indicated by the applications processor 1102.

Synthesizer circuitry 1106d of the RF circuitry 1106 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 1106d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 1106 may include an IQ/polar converter.

FEM circuitry 1108 may include a receive signal path which may include circuitry configured to operate on RF signals received from one or more antennas 1110, amplify the received signals and provide the amplified versions of the received signals to the RF circuitry 1106 for further processing. FEM circuitry 1108 may also include a transmit signal path which may include circuitry configured to amplify signals for transmission provided by the RF circuitry 1106 for transmission by one or more of the one or more antennas 1110.

In some embodiments, the FEM circuitry 1108 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 1106). The transmit signal path of the FEM circuitry 1108 may include a power amplifier (PA) to amplify input RF signals (e.g., provided by RF circuitry 1106), and one or more filters to generate RF signals for subsequent transmission (e.g., by one or more of the one or more antennas 1110.

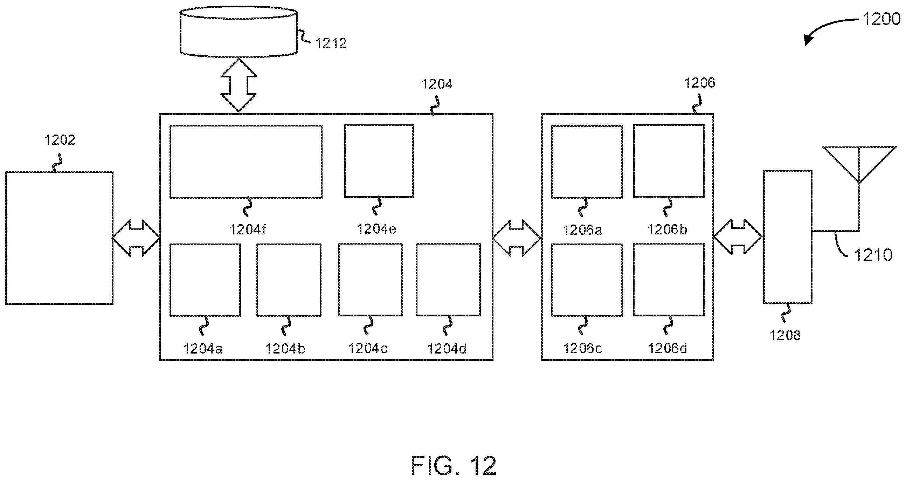

FIG. 12 provides an example illustration of a user equipment (UE) device 1200, such as a wireless device, a mobile station (MS), a mobile wireless device, a mobile communication device, a tablet, a handset, a CIoT device, or other type of wireless device. The UE device 1200 can include one or more antennas configured to communicate with a node or transmission station, such as a base station (BS), an evolved Node B (eNB), a baseband unit (BBU), a remote radio head (RRH), a remote radio equipment (RRE), a relay station (RS), a radio equipment (RE), a remote radio unit (RRU), a central processing module (CPM), or other type of wireless wide area network (WWAN) access point. The UE device 1200 can be configured to communicate using at least one wireless communication standard such as, but not limited to, 3GPP LTE, WiMAX, High Speed Packet Access (HSPA), Bluetooth, and WiFi. The UE device 1200 can communicate using separate antennas for each wireless communication standard or shared antennas for multiple wireless communication standards. The UE device 1200 can communicate in a wireless local area network (WLAN), a wireless personal area network (WPAN), and/or a WWAN.

In some embodiments, the UE device 1200 may include application circuitry 1202, baseband circuitry 1204, Radio Frequency (RF) circuitry 1206, front-end module (FEM) circuitry 1208 and one or more antennas 1210, coupled together at least as shown.

The application circuitry 1202 may include one or more application processors. For example, the application circuitry 1202 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage (e.g., storage medium 1212) and may be configured to execute instructions stored in the memory/storage (e.g., storage medium 1212) to enable various applications and/or operating systems to run on the system.

The baseband circuitry 1204 may include circuitry such as, but not limited to, one or more single-core or multi-core processors. The baseband circuitry 1204 may include one or more baseband processors and/or control logic to process baseband signals received from a receive signal path of the RF circuitry 1206 and to generate baseband signals for a transmit signal path of the RF circuitry 1206. Baseband processing circuity 1204 may interface with the application circuitry 1202 for generation and processing of the baseband signals and for controlling operations of the RF circuitry 1206. For example, in some embodiments, the baseband circuitry 1204 may include a second generation (2G) baseband processor 1204a, third generation (3G) baseband processor 1204b, fourth generation (4G) baseband processor 1204c, and/or other baseband processor(s) 1204d for other existing generations, generations in development or to be developed in the future (e.g., fifth generation (5G), 6G, etc.). The baseband circuitry 1204 (e.g., one or more of baseband processors 1204a-d) may handle various radio control functions that enable communication with one or more radio networks via the RF circuitry 1206. The radio control functions may include, but are not limited to, signal modulation/demodulation, encoding/decoding, radio frequency shifting, etc. In some embodiments, modulation/demodulation circuitry of the baseband circuitry 1204 may include Fast-Fourier Transform (FFT), precoding, and/or constellation mapping/demapping functionality. In some embodiments, encoding/decoding circuitry of the baseband circuitry 1204 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 1204 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 1204e of the baseband circuitry 1204 may be configured to run elements of the protocol stack for signaling of the PHY, MAC, RLC, PDCP and/or RRC layers. In some embodiments, the baseband circuitry may include one or more audio digital signal processor(s) (DSP) 1204f. The audio DSP(s) 1204f may include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 1204 and the application circuitry 1202 may be implemented together such as, for example, on a system on a chip (SOC).

In some embodiments, the baseband circuitry 1204 may provide for communication compatible with one or more radio technologies. For example, in some embodiments, the baseband circuitry 1204 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 1204 is configured to support radio communications of more than one wireless protocol may be referred to as multi-mode baseband circuitry.

The RF circuitry 1206 may enable communication with wireless networks using modulated electromagnetic radiation through a non-solid medium. In various embodiments, the RF circuitry 1206 may include switches, filters, amplifiers, etc. to facilitate the communication with the wireless network. RF circuitry 1206 may include a receive signal path which may include circuitry to down-convert RF signals received from the FEM circuitry 1208 and provide baseband signals to the baseband circuitry 1204. RF circuitry 1206 may also include a transmit signal path which may include circuitry to up-convert baseband signals provided by the baseband circuitry 1204 and provide RF output signals to the FEM circuitry 1208 for transmission.

In some embodiments, the RF circuitry 1206 may include a receive signal path and a transmit signal path. The receive signal path of the RF circuitry 1206 may include mixer circuitry 1206a, amplifier circuitry 1206b and filter circuitry 1206c. The transmit signal path of the RF circuitry 1206 may include filter circuitry 1206c and mixer circuitry 1206a. RF circuitry 1206 may also include synthesizer circuitry 1206d for synthesizing a frequency for use by the mixer circuitry 1206a of the receive signal path and the transmit signal path. In some embodiments, the mixer circuitry 1206a of the receive signal path may be configured to down-convert RF signals received from the FEM circuitry 1208 based on the synthesized frequency provided by synthesizer circuitry 1206d. The amplifier circuitry 1206b may be configured to amplify the down-converted signals and the filter circuitry 1206c may be a low-pass filter (LPF) or band-pass filter (BPF) configured to remove unwanted signals from the down-converted signals to generate output baseband signals. Output baseband signals may be provided to the baseband circuitry 1204 for further processing. In some embodiments, the output baseband signals may be zero-frequency baseband signals, although other types of baseband signals may be used. In some embodiments, mixer circuitry 1206a of the receive signal path may comprise passive mixers, although the scope of the embodiments is not limited in this respect.

In some embodiments, the mixer circuitry 1206a of the transmit signal path may be configured to up-convert input baseband signals based on the synthesized frequency provided by the synthesizer circuitry 1206d to generate RF output signals for the FEM circuitry 1208. The baseband signals may be provided by the baseband circuitry 1204 and may be filtered by filter circuitry 1206c. The filter circuitry 1206c may include a low-pass filter (LPF), although the scope of the embodiments is not limited in this respect.

In some embodiments, the mixer circuitry 1206a of the receive signal path and the mixer circuitry 1206a of the transmit signal path may include two or more mixers and may be arranged for quadrature down-conversion and/or up-conversion respectively. In some embodiments, the mixer circuitry 1206a of the receive signal path and the mixer circuitry 1206a of the transmit signal path may include two or more mixers and may be arranged for image rejection (e.g., Hartley image rejection). In some embodiments, the mixer circuitry 1206a of the receive signal path and the mixer circuitry 1206a may be arranged for direct down-conversion and/or direct up-conversion, respectively. In some embodiments, the mixer circuitry 1206a of the receive signal path and the mixer circuitry 1206a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 1206 may include analog-to-digital converter (ADC) and digital-to-analog converter (DAC) circuitry and the baseband circuitry 1204 may include a digital baseband interface to communicate with the RF circuitry 1206.

In some dual-mode embodiments, a separate radio IC circuitry may be provided for processing signals for each spectrum, although the scope of the embodiments is not limited in this respect.

In some embodiments, the synthesizer circuitry 1206d may be a fractional-N synthesizer or a fractional N/N+1 synthesizer, although the scope of the embodiments is not limited in this respect as other types of frequency synthesizers may be suitable. For example, synthesizer circuitry 1206d may be a delta-sigma synthesizer, a frequency multiplier, or a synthesizer comprising a phase-locked loop with a frequency divider.

The synthesizer circuitry 1206d may be configured to synthesize an output frequency for use by the mixer circuitry 1206a of the RF circuitry 1206 based on a frequency input and a divider control input. In some embodiments, the synthesizer circuitry 1206d may be a fractional N/N+1 synthesizer.

In some embodiments, frequency input may be provided by a voltage controlled oscillator (VCO), although other types of devices may provide the frequency input. Divider control input may be provided by either the baseband circuitry 1204 or the applications processor 1202 depending on the desired output frequency. In some embodiments, a divider control input (e.g., N) may be determined from a look-up table based on a channel indicated by the applications processor 1202.

Synthesizer circuitry 1206d of the RF circuitry 1206 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 1206d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 1206 may include an IQ/polar converter.

FEM circuitry 1208 may include a receive signal path which may include circuitry configured to operate on RF signals received from one or more antennas 1210, amplify the received signals and provide the amplified versions of the received signals to the RF circuitry 1206 for further processing. FEM circuitry 1208 may also include a transmit signal path which may include circuitry configured to amplify signals for transmission provided by the RF circuitry 1206 for transmission by one or more of the one or more antennas 1210.

In some embodiments, the FEM circuitry 1208 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 1206). The transmit signal path of the FEM circuitry 1208 may include a power amplifier (PA) to amplify input RF signals (e.g., provided by RF circuitry 1206), and one or more filters to generate RF signals for subsequent transmission (e.g., by one or more of the one or more antennas 1210.

In some embodiments, the UE device 1200 may include additional elements such as, for example, memory/storage, display (e.g., touch screen), camera, antennas, keyboard, microphone, speakers, sensor, and/or input/output (I/O) interface.

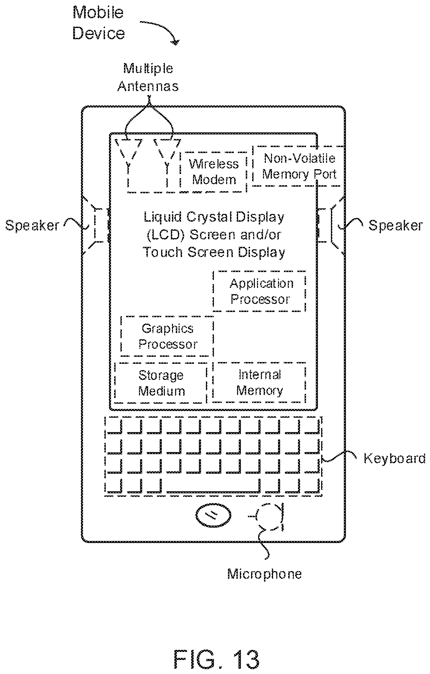

FIG. 13 provides an example illustration of the wireless device, such as a user equipment (UE), a mobile station (MS), a mobile wireless device, a mobile communication device, a tablet, a handset, or other type of wireless device. The wireless device can include one or more antennas configured to communicate with a node, macro node, low power node (LPN), or, transmission station, such as a base station (BS), an evolved Node B (eNB), a baseband processing unit (BBU), a remote radio head (RRH), a remote radio equipment (RRE), a relay station (RS), a radio equipment (RE), or other type of wireless wide area network (WWAN) access point. The wireless device can be configured to communicate using at least one wireless communication standard such as, but not limited to, 3GPP LTE, WiMAX, High Speed Packet Access (HSPA), Bluetooth, and WiFi. The wireless device can communicate using separate antennas for each wireless communication standard or shared antennas for multiple wireless communication standards. The wireless device can communicate in a wireless local area network (WLAN), a wireless personal area network (WPAN), and/or a WWAN. The wireless device can also comprise a wireless modem. The wireless modem can comprise, for example, a wireless radio transceiver and baseband circuitry (e.g., a baseband processor). The wireless modem can, in one example, modulate signals that the wireless device transmits via the one or more antennas and demodulate signals that the wireless device receives via the one or more antennas.

FIG. 13 also provides an illustration of a microphone and one or more speakers that can be used for audio input and output from the wireless device. The display screen can be a liquid crystal display (LCD) screen, or other type of display screen such as an organic light emitting diode (OLED) display. The display screen can be configured as a touch screen. The touch screen can use capacitive, resistive, or another type of touch screen technology. An application processor and a graphics processor can be coupled to internal memory to provide processing and display capabilities. A non-volatile memory port can also be used to provide data input/output options to a user. The non-volatile memory port can also be used to expand the memory capabilities of the wireless device. A keyboard can be integrated with the wireless device or wirelessly connected to the wireless device to provide additional user input. A virtual keyboard can also be provided using the touch screen.

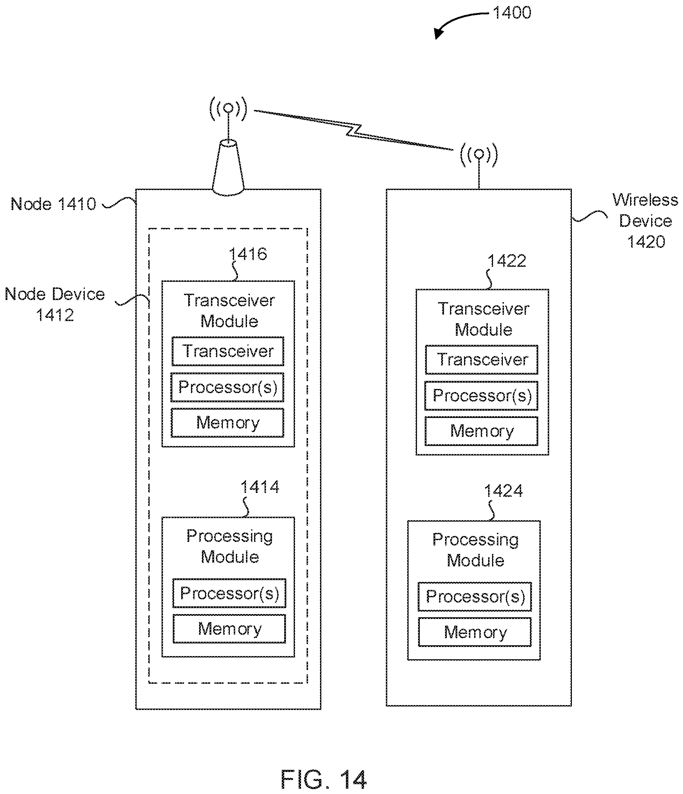

FIG. 14 illustrates a diagram 1400 of a node 1410 (e.g., eNB and/or a Serving GPRS Support Node) and a wireless device 1420 (e.g., UE) in accordance with an example. The node can include a base station (BS), a Node B (NB), an evolved Node B (eNB), a baseband unit (BBU), a remote radio head (RRH), a remote radio equipment (RRE), a remote radio unit (RRU), or a central processing module (CPM). In one aspect, the node can be a Serving GPRS Support Node. The node 1410 can include a node device 1412. The node device 1412 or the node 1410 can be configured to communicate with the wireless device 1420. The node device 1412 can be configured to implement technologies described herein. The node device 1412 can include a processing module 1414 and a transceiver module 1416. In one aspect, the node device 1412 can include the transceiver module 1416 and the processing module 1414 forming a circuitry for the node 1410. In one aspect, the transceiver module 1416 and the processing module 1414 can form a circuitry of the node device 1412. The processing module 1414 can include one or more processors and memory. In one embodiment, the processing module 1422 can include one or more application processors. The transceiver module 1416 can include a transceiver and one or more processors and memory. In some examples, components of the transceiver module 1416 can be included in separate devices. For example, selected components of the transceiver module 1416 may be located in a cloud radio access network (C-RAN). In one embodiment, the transceiver module 1416 can include a baseband processor. In some examples, components of the transceiver module 1416 can be included in separate devices.

The wireless device 1420 can include a transceiver module 1424 and a processing module 1422. The processing module 1422 can include one or more processors and memory. In one embodiment, the processing module 1422 can include one or more application processors. The transceiver module 1424 can include a transceiver and one or more processors and memory. In one embodiment, the transceiver module 1424 can include a baseband processor. The wireless device 1420 can be configured to implement technologies described herein. The node 1410 and the wireless devices 1420 can also include one or more storage mediums, such as the transceiver module 1416, 1424 and/or the processing module 1414, 1422.

Various techniques, or certain aspects or portions thereof, may take the form of program code (i.e., instructions) embodied in tangible media, such as floppy diskettes, compact disc-read-only memory (CD-ROMs), hard drives, non-transitory computer readable storage medium, or any other machine-readable storage medium wherein, when the program code is loaded into and executed by a machine, such as a computer, the machine becomes an apparatus for practicing the various techniques. In the case of program code execution on programmable computers, the computing device may include a processor, a storage medium readable by the processor (including volatile and non-volatile memory and/or storage elements), at least one input device, and at least one output device. The volatile and non-volatile memory and/or storage elements may be a random-access memory (RAM), erasable programmable read only memory (EPROM), flash drive, optical drive, magnetic hard drive, solid state drive, or other medium for storing electronic data. The node and wireless device may also include a transceiver module (i.e., transceiver), a counter module (i.e., counter), a processing module (i.e., processor), and/or a clock module (i.e., clock) or timer module (i.e., timer). In one example, selected components of the transceiver module can be located in a cloud radio access network (C-RAN). One or more programs that may implement or utilize the various techniques described herein may use an application programming interface (API), reusable controls, and the like. Such programs may be implemented in a high level procedural or object oriented programming language to communicate with a computer system. However, the program(s) may be implemented in assembly or machine language, if desired. In any case, the language may be a compiled or interpreted language, and combined with hardware implementations.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

It should be understood that many of the functional units described in this specification have been labeled as modules, in order to more particularly emphasize their implementation independence. For example, a module may be implemented as a hardware circuit comprising custom very-large-scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module may not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

Reference throughout this specification to "an example" or "exemplary" means that a particular feature, structure, or characteristic described in connection with the example is included in at least one embodiment of the present technology. Thus, appearances of the phrases "in an example" or the word "exemplary" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present technology may be referred to herein along with alternatives for the various components thereof. It is understood that such embodiments, examples, and alternatives are not to be construed as defacto equivalents of one another, but are to be considered as separate and autonomous representations of the present technology.

Furthermore, the described features, structures, or characteristics may be combined in any suitable manner in one or more embodiments. In the following description, numerous specific details are provided, such as examples of layouts, distances, network examples, etc., to provide a thorough understanding of embodiments of the technology. One skilled in the relevant art will recognize, however, that the technology can be practiced without one or more of the specific details, or with other methods, components, layouts, etc. In other instances, well-known structures, materials, or operations are not shown or described in detail to avoid obscuring aspects of the technology.

While the forgoing examples are illustrative of the principles of the present technology in one or more particular applications, it will be apparent to those of ordinary skill in the art that numerous modifications in form, usage and details of implementation can be made without the exercise of inventive faculty, and without departing from the principles and concepts of the technology. Accordingly, it is not intended that the technology be limited, except as by the claims set forth below.

## Claims

1. An apparatus of a user equipment, UE, configured to operate in a high speed train, HST, environment, the apparatus comprising:

   one or more processors configured to:

   identify the UE is operating in the HST environment;
   configure the UE in a radio resource control connected, RRC_Connected, mode;
   decode network assistant information for the UE operating in the HST environment, wherein the network assistant information includes:
   a number of cells to be measured in the RRC_Connected mode while operating in the HST environment, wherein the number of cells is included in a maxCellsMeasHST parameter, wherein the maxCellsMeasHST parameter is a subset of a maximum cells to be measured, maxCellsMeas, and the measurement of the subset increases a cell detection speed at the UE; and,

   memory coupled to the one or more processors and configured to store the maxCellsMeasHST parameter;
   wherein the one or more processors are configured to encode the one or more channel quality measurements in a measurement object EUTRA, MeasObjectEUTRA, information element; and
   wherein the network assistant information further comprises a MeasObjectEUTRA information element that includes an HST cell identification indicator, cellIDIndHST operable to indicate a cell identification, ID, of a target cell that the UE will select for handover, wherein the cellIDIndHST includes a Boolean to indicate that a detection procedure of a target cell identification, ID, will be skipped to eliminate a time used to search for a physical cell ID, PCID, of the target cell that the UE will select for handover.

2. The apparatus of claim 1, wherein the one or more processors are configured to encode one or more channel quality measurements performed by the UE, for each of the number of cells.

3. The apparatus of claim 1 or 2, wherein the one or more channel quality measurements comprises:

   a Reference Signal Receive Quality, RSRQ;
   a Reference Signal Receive Power, RSRP; or
   a Reference Signal-Signal to Interference Noise Ratio, RS-SINR; and

   the one or more channel quality measurements are performed in a time measurement period of intra-frequency cells, $T_{measurement\_Period\ Intra}$.

4. The apparatus of claim 1 wherein the one or more processors are further configured to:

decode a frequency offset value and a timing offset value based on an estimated Doppler shift received in the network assistant information in the MeasObjectEUTRA for each of the number of cells associated with the maxCellsMeasHST parameter to reduce synchronization error in a handover with one of the number of cells; or decode an explicit neighbor cell list of inter-frequency cells including a physical layer cell identity, and carrier frequency information for each inter-frequency cell for an HST environment.

5. An apparatus of an evolved node B, eNB, configured to operate in a high speed train, HST, environment, the apparatus comprising:

one or more processors configured to:

identify a UE configured to operate in a radio resource control connected, RRC_Connected, mode in the HST environment;
encode a maxCellsMeasHST parameter in a measurement object evolved universal terrestrial radio access, MeasObjectEUTRA, information element for transmission to the UE, wherein the maxCellsMeasHST parameter comprises a number of cells to be measured, by the UE, in the RRC_Connected mode while operating in the HST environment and the maxCellsMeasHST parameter is a subset of the maximum cells to be measured, maxCellsMeas, and the measurement of the subset increases a cell detection speed at the UE; and,

memory coupled to the one or more processors and configured to store the maxCellsMeasHST parameter;
wherein the one or more processors are configured to decode the one or more channel quality measurements in a measurement object EUTRA, MeasObjectEUTRA, information element; and
wherein the MeasObjectEUTRA information element further comprises: an HST cell identification indicator, cellIDIndHST, operable to indicate a target cell that the UE will select for handover and wherein the cellIDIndHST includes a Boolean to indicate that a detection procedure of a target cell identification, ID, will be skipped to eliminate a time used to search for a physical cell ID, PCID, of the target cell that the UE will select for handover.

6. The apparatus of claim 5, wherein the one or more processors are configured to decode one or more channel quality measurements received from the UE, for each of the number of cells.

7. The apparatus of claim 5 or 6, wherein the one or more channel quality measurements comprises:

a Reference Signal Receive Quality, RSRQ;
a Reference Signal Receive Power, RSRP; or
a Reference Signal-Signal to Interference Noise Ratio, RS-SINR;
and,
the one or more channel quality measurements are performed in a time measurement period of intra-frequency cells, $T_{measurement\_Period\ Intra}$.

8. The apparatus of claim 5 wherein the one or more processors are further configured to:
encode a frequency offset value and a timing offset value based on an estimated Doppler shift received in the MeasObjectEUTRA for each of the number of cells associated with the maxCellsMeasHST parameter to enable the UE to reduce synchronization error in a handover with one of the number of cells.

9. At least one machine readable storage medium having instructions embodied thereon for a user equipment, UE, operating in a high speed train, HST, environment, the instructions when executed by one or more processors at the UE perform the following:

identify the UE configured to operate in a radio resource control connected, RRC_Connected, mode in the HST environment;
identify a number of cells to be measured in the RRC_Connected mode while operating in the HST environment as a maxCellsMeasHST parameter, wherein the maxCellsMeasHST parameter is a subset of a maximum cells to be measured, maxCellsMeas, parameter and the subset increases a cell detection speed at the UE; and
decode, the maxCellsMeasHST parameter in a measurement object evolved universal terrestrial radio access, MeasObjectEUTRA, received from an evolved Node B, eNB; and

encode the one or more channel quality measurements in a measurement object EUTRA, MeasObjectEUTRA, information element;

wherein the MeasObjectEUTRA comprises: an HST cell identification indicator, cellIDIndHST, parameter operable to indicate a target cell that the UE will select for handover, wherein the cellIDIndHST includes a Boolean to indicate that a detection procedure of a target cell identification, ID, will be skipped to eliminate a time used to search for a physical cell ID, PCID, of the target cell that the UE will select for handover.

10. The at least one machine readable storage medium in claim 9 further comprising instructions, that when executed by one or more processors at the UE, perform the following:

encode one or more channel quality measurements performed by the UE, for each of the number of cells.

11. The at least one machine readable storage medium in claim 9 or 10, wherein the one or more channel quality measurements comprises: a Reference Signal Receive Quality, RSRQ, measurement, a Reference Signal Receive Power, RSRP, measurement, and a Reference Signal-Signal to Interference Noise Ratio, RS-SINR, measurement, and the one or more channel quality measurements are performed in a time measurement period of intra-frequency cells, $T_{measurement\_Period\ Intra}$.

12. The at least one machine readable storage medium of claims 9 or 10 wherein the one or more processors are further configured to:

decode a frequency offset value and a timing offset value based on an estimated Doppler shift received in the MeasObjectEUTRA information element for each of the number of cells associated with the maxCellsMeasHST parameter to reduce synchronization error in a handover with one of the number of cells.

**Patentansprüche**

1. Vorrichtung einer Benutzerausrüstung, UE, konfiguriert zum Betrieb in einer Hochgeschwindigkeitszug-, HST-, Umgebung, wobei die Vorrichtung umfasst:
einen oder mehrere Prozessoren, konfiguriert zum:

Identifizieren der UE, die in der HST-Umgebung betrieben wird;
Konfigurieren der UE in einem radio resource control connected, RRC_Connected, Modus;
Dekodieren einer Netzwerkassistenteninformation für die in der HST-Umgebung betriebene UE, wobei die Netzwerkassistenteninformation enthält:

eine Anzahl von Zellen, die in dem RRC Connected-Modus zu messen sind, während sie in der HST-Umgebung betrieben werden, wobei die Anzahl von Zellen in einem maxCellsMeasHST Parameter enthalten ist, wobei der maxCellsMeasHST Parameter eine Teilmenge von maximal zu messenden Zellen, maxCellsMeas, ist und die Messung der Teilmenge eine Zellenerfassungsgeschwindigkeit an der UE erhöht; und,
einen Speicher, der mit einem oder mehreren Prozessoren gekoppelt und konfiguriert ist, um den Parameter maxCellsMeasHST zu speichern;
wobei der eine oder die mehreren Prozessoren konfiguriert sind, um die eine oder die mehreren Kanalqualitätsmessungen in einem Messobjekt EUTRA, MeasObjectEUTRA, Informationselement zu kodieren; und
wobei die Netzwerkassistenteninformation ferner ein MeasObjectEUTRA Informationselement umfasst, das einen HST-Zellenidentifikationsindikator, cellIDIndHST, enthält, der betrieben werden kann, um eine Zellenidentifikation, ID, einer Zielzelle anzuzeigen, die die UE für den Handover auswählen wird, wobei der cellIDIndHST einen Booleschen Wert enthält, um anzuzeigen, dass eine Erfassungsprozedur einer Zielzellenidentifikation, ID, übersprungen wird, um eine Zeit zu eliminieren, die verwendet wird, um nach einer physischen Zellen-ID, PCID, der Zielzelle zu suchen, die die UE für den Handover auswählen wird.

2. Vorrichtung nach Anspruch 1, wobei der eine oder die mehreren Prozessoren konfiguriert sind, um eine oder mehrere Kanalqualitätsmessungen, die von der UE durchgeführt werden, für jede der Anzahl von Zellen zu kodieren.

3. Vorrichtung nach Anspruch 1 oder 2, wobei die eine oder die mehreren Kanalqualitätsmessungen umfassen:

eine Referenzsignal-Empfangsqualität, RSRQ;
eine Referenzsignal-Empfangsleistung, RSRP; oder

ein Referenzsignal-Signal zu Störsignal Rausch-Verhältnis, RS-SINR; und

die eine oder die mehreren Kanalqualitätsmessungen werden in einer Zeitmessperiode von Intra-Frequenz-Zellen, $T_{measurement\_Period\ Intra}$, durchgeführt.

4. Vorrichtung nach Anspruch 1, wobei der eine oder die mehreren Prozessoren ferner konfiguriert sind zum:

Dekodieren eines Frequenzversatzwertes und eines Zeitversatzwertes auf der Grundlage einer geschätzten Doppler-Verschiebung, die in der Netzwerkassistenteninformation im MeasObjectEUTRA für jede der Anzahl von Zellen empfangen wird, die mit dem Parameter maxCellsMeasHST assoziiert ist, um den Synchronisationsfehler bei einem Handover mit einer von der Anzahl von Zellen zu reduzieren; oder
Dekodieren einer expliziten Nachbarzellenliste von Inter-Frequenz-Zellen, die eine Zellidentität der physischen Schicht und eine Trägerfrequenzinformation für jede Inter-Frequenz-Zelle für eine HST-Umgebung enthält.

5. Vorrichtung einer evolved node B, eNB, konfiguriert für den Betrieb in einer Hochgeschwindigkeitszug, HST, Umgebung, wobei die Vorrichtung umfasst:

einen oder mehrere Prozessoren, die konfiguriert sind zum:

Identifizieren einer UE, die konfiguriert ist, um in einem radio resource control connected, RRC_Connected, Modus in der HST-Umgebung betrieben zu werden;
Kodieren eines maxCellsMeasHST Parameters in einem Messobjekt evolved universal terrestrial radio access, MeasObjectEUTRA, Informationselement zur Übertragung an die UE, wobei der maxCells-MeasHST Parameter eine Anzahl von Zellen umfasst, die von der UE in dem RRC Connected-Modus zu messen sind, während sie in der HST-Umgebung betrieben werden, und wobei der maxCellsMeasHST Parameter eine Teilmenge der maximal zu messenden Zellen, maxCellsMeas, ist, und die Messung der Teilmenge eine Zellenerfassungsgeschwindigkeit an der UE erhöht; und
einen Speicher, der mit dem einen oder den mehreren Prozessoren gekoppelt und konfiguriert ist, um den maxCellsMeasHST Parameter zu speichern;

wobei der eine oder die mehreren Prozessoren konfiguriert sind, um die eine oder die mehreren Kanalqualitätsmessungen in einem Messobjekt EUTRA, MeasObjectEUTRA, Informationselement zu dekodieren; und
wobei das Informationselement MeasObjectEUTRA ferner umfasst:
einen HST-Zellenidentifikationsindikator, cellIDIndHST, der betrieben werden kann, um eine Zielzelle anzuzeigen, die die UE für einen Handover auswählen wird, und wobei der cellIDIndHST einen Booleschen Wert enthält, um anzuzeigen, dass eine Erfassungsprozedur einer Zielzellenidentifikation, ID, übersprungen wird, um eine Zeit zu eliminieren, die verwendet wird, um nach einer physischen Zellen-ID, PCID, der Zielzelle zu suchen, die die UE für den Handover auswählen wird.

6. Vorrichtung nach Anspruch 5, wobei der eine oder die mehreren Prozessoren konfiguriert sind, um eine oder mehrere Kanalqualitätsmessungen, die von der UE empfangen werden, für jede der Anzahl von Zellen zu dekodieren.

7. Vorrichtung nach Anspruch 5 oder 6, wobei die eine oder die mehreren Kanalqualitätsmessungen umfassen:

eine Referenzsignal-Empfangsqualität, RSRQ;
eine Referenzsignal-Empfangsleistung, RSRP; oder
ein Referenzsignal-Signal zu Störsignal Rausch-Verhältnis, RS-SINR; und
die eine oder die mehreren Kanalqualitätsmessungen werden in einer Zeitmessperiode von Intra-Frequenz-Zellen, $T_{measurement\_Period\ Intra}$, durchgeführt.

8. Vorrichtung nach Anspruch 5, wobei der eine oder die mehreren Prozessoren ferner konfiguriert sind zum:
Kodieren eines Frequenzversatzwertes und eines Zeitversatzwertes auf der Grundlage einer geschätzten Doppler-Verschiebung, die im MeasObjectEUTRA für jede der Anzahl von Zellen empfangen wird, die mit dem Parameter maxCellsMeasHST assoziiert ist, um es der UE zu ermöglichen, den Synchronisationsfehler bei einem Handover mit einer der Anzahl von Zellen zu reduzieren.

9. Mindestens ein maschinenlesbares Speichermedium mit darauf enthaltenen Anweisungen für eine Benutzerausrüstung, UE, die in einer Hochgeschwindigkeitszug, HST, Umgebung betrieben wird, wobei die Anweisungen, wenn sie von einem oder mehreren Prozessoren in der UE ausgeführt werden, folgendes durchführen:

Identifizieren der UE, die konfiguriert ist, um in einem radio resource control connected, RRC_Connected, Modus in der HST-Umgebung betrieben zu werden;
Identifizieren einer Anzahl von Zellen, die in dem RRC_Connected-Modus zu messen sind, während sie in der HST-Umgebung betrieben werden, als einen maxCellsMeasHST Parameter, wobei der maxCellsMeasHST Parameter eine Teilmenge der maximal zu messenden Zellen, maxCellsMeas, ist, und die Teilmenge eine Zellenerfassungsgeschwindigkeit an der UE erhöht; und

Dekodieren des maxCellsMeasHST Parameters in einem Messobjekt evolved universal terrestrial radio access, MeasObjectEUTRA, das von einer evolved Node B, eNB, empfangen wurde; und
Kodieren der einen oder der mehreren Kanalqualitätsmessungen in einem Messobjekt EUTRA, MeasObjectEUTRA, Informationselement;
wobei das MeasObjectEUTRA umfasst:
einen HST-Zellenidentifikationsindikator, cellIDIndHST, Parameter, der betrieben werden kann, um eine Zielzelle anzuzeigen, die die UE für einen Handover auswählen wird, wobei der cellIDIndHST einen Booleschen Wert enthält, um anzuzeigen, dass eine Erfassungsprozedur einer Zielzellenidentifikation, ID, übersprungen wird, um eine Zeit zu eliminieren, die verwendet wird, um nach einer physischen Zellen-ID, PCID, der Zielzelle zu suchen, die die UE für den Handover auswählen wird.

**10.** Mindestens ein maschinenlesbares Speichermedium nach Anspruch 9, ferner umfassend Anweisungen, die, wenn sie von einem oder mehreren Prozessoren in der UE ausgeführt werden, Folgendes durchführen:
Kodieren einer oder mehrerer Kanalqualitätsmessungen, die von der UE durchgeführt werden, für jede der Anzahl von Zellen.

**11.** Mindestens ein maschinenlesbares Speichermedium nach Anspruch 9 oder 10, wobei die eine oder die mehreren Kanalqualitätsmessungen umfassen:
eine Messung der Referenzsignal-Empfangsqualität, RSRQ, eine Messung der Referenzsignal-Empfangsleistung, RSRP, und eine Messung des Referenzsignal-Signal zu Störsignal Rausch-Verhältnisses, RS-SINR, und die eine oder die mehreren Kanalqualitätsmessungen werden in einer Zeitmessperiode von Intra-Frequenz-Zellen, $T_{measurement\_Period\ Intra}$, durchgeführt.

**12.** Mindestens ein maschinenlesbares Speichermedium nach Anspruch 9 oder 10, wobei der eine oder die mehreren Prozessoren ferner konfiguriert sind zum:
Dekodieren eines Frequenzversatzwertes und eines Zeitversatzwertes auf der Grundlage einer geschätzten Doppler-Verschiebung, die im Informationselement MeasObjectEUTRA für jede der Anzahl von Zellen empfangen wird, die mit dem Parameter maxCellsMeasHST verbunden ist, um den Synchronisationsfehler bei einem Handover mit einer der Anzahl von Zellen zu reduzieren.

**Revendications**

**1.** Un appareil d'un équipement utilisateur, UE, configuré pour fonctionner dans un environnement de train à grande vitesse, HST, l'appareil comprenant :

un ou plusieurs processeurs configurés pour :

identifier que l'UE fonctionne dans l'environnement HST ;
configurer l'UE dans un mode de contrôle de ressource radio connecté, RRC_Connected ;
décoder une information d'assistant réseau pour l'UE fonctionnant dans l'environnement HST, dans lequel l'information d'assistant réseau inclut :
un nombre de cellules à mesurer dans le mode RRC_Connected tout en fonctionnant dans l'environnement HST, dans lequel le nombre de cellules est inclus dans un paramètre maxCellsMeasHST, dans lequel le paramètre maxCellsMeasHST est un sous-ensemble de cellules maximales à mesurer, maxCellsMeas, et la mesure du sous-ensemble augmente une vitesse de détection de cellule au niveau de l'UE ; et

une mémoire couplée aux un ou plusieurs processeurs et configurée pour stocker le paramètre maxCellsMeasHST ;

dans lequel les un ou plusieurs processeurs sont configurés pour coder les une ou plusieurs mesures de qualité de canal dans un élément d'information EUTRA d'objet de mesure, MeasObjectEUTRA ; et

dans lequel l'information d'assistant réseau comprend en outre un élément d'information MeasObjectEUTRA qui inclut un indicateur d'identification de cellule HST, cellIDIndHST exploitable pour indiquer une identification, ID, de cellule d'une cellule cible que l'UE sélectionnera pour le handover, dans lequel le cellIDIndHST inclut un Booléen pour indiquer qu'une procédure de détection d'une identification, ID, de cellule cible sera sautée pour éliminer un temps utilisé pour rechercher un ID de cellule physique, PCID, de la cellule cible que l'UE sélectionnera pour le handover.

2. L'appareil selon la revendication 1, dans lequel les un ou plusieurs processeurs sont configurés pour coder une ou plusieurs mesures de qualité de canal effectuées par l'UE, pour chacune du nombre de cellules.

3. L'appareil selon la revendication 1 ou 2, dans lequel les une ou plusieurs mesures de qualité de canal comprennent :

une qualité de réception de signal de référence, RSRQ ;
une puissance de réception de signal de référence, RSRP ; ou
un rapport signal sur interférence bruit de signal de référence, RS-SINR ; et
les une ou plusieurs mesures de qualité de canal sont effectuées dans une période de mesure de temps de cellules intra-fréquence, $T_{measurement\_Period\ Intra}$.

4. L'appareil selon la revendication 1, dans lequel les un ou plusieurs processeurs sont en outre configurés pour :

décoder une valeur de décalage de fréquence et une valeur de décalage de séquencement sur la base d'un déplacement Doppler estimé reçu dans l'information d'assistant réseau dans le MeasObjectEUTRA pour chacune du nombre de cellules associées au paramètre maxCellsMeasHST pour réduire une erreur de synchronisation dans un handover avec l'une du nombre de cellules ; ou
décoder une liste de cellules voisines explicite de cellules inter-fréquence incluant une identité de cellule de couche physique, et une information de fréquence porteuse pour chaque cellule inter-fréquence pour un environnement HST.

5. Un appareil d'un nœud B évolué, eNB, configuré pour fonctionner dans un environnement de train à grande vitesse, HST, l'appareil comprenant :

un ou plusieurs processeurs configurés pour :

identifier un UE configuré pour fonctionner dans un mode de contrôle de ressource radio connecté, RRC_Connected, dans l'environnement HST ;
coder un paramètre maxCellsMeasHST dans un élément d'information d'accès radio terrestre universel évolué d'objet de mesure, MeasObjectEUTRA, pour la transmission à l'UE, dans lequel le paramètre maxCellsMeasHST comprend un nombre de cellules à mesurer, par l'UE, dans le mode RRC_Connected tout en fonctionnant dans l'environnement HST et le paramètre maxCellsMeasHST est un sous-ensemble des cellules maximales à mesurer, maxCellsMeas, et la mesure du sous-ensemble augmente une vitesse de détection de cellule au niveau de l'UE ; et

une mémoire couplée aux un ou plusieurs processeurs et configurée pour stocker le paramètre maxCellsMeasHST ;
dans lequel les un ou plusieurs processeurs sont configurés pour décoder les une ou plusieurs mesures de qualité de canal dans un élément d'information EUTRA d'objet de mesure, MeasObjectEUTRA ; et
dans lequel l'élément d'information MeasObjectEUTRA comprend en outre : un indicateur d'identification de cellule HST, cellIDIndHST, exploitable pour indiquer une cellule cible que l'UE sélectionnera pour le handover et dans lequel le cellIDIndHST inclut un Booléen pour indiquer qu'une procédure de détection d'une identification, ID, de cellule cible sera sautée pour éliminer un temps utilisé pour rechercher un ID de cellule physique, PCID, de la cellule cible que l'UE sélectionnera pour le handover.

6. L'appareil selon la revendication 5, dans lequel les un ou plusieurs processeurs sont configurés pour décoder une ou plusieurs mesures de qualité de canal reçues en provenance de l'UE, pour chacune du nombre de cellules.

7. L'appareil selon la revendication 5 ou 6, dans lequel les une ou plusieurs mesures de qualité de canal comprennent :

une qualité de réception de signal de référence, RSRQ ;

une puissance de réception de signal de référence, RSRP ; ou

un rapport signal sur interférence bruit de signal de référence, RS-SINR ; et,

les une ou plusieurs mesures de qualité de canal sont effectuées dans une période de mesure de temps de cellules intra-fréquence, $T_{measurement\_Period\ Intra}$.

8. L'appareil selon la revendication 5, dans lequel les un ou plusieurs processeurs sont en outre configurés pour : coder une valeur de décalage de fréquence et une valeur de décalage de séquencement sur la base d'un déplacement Doppler estimé reçu dans le MeasObjectEUTRA pour chacune du nombre de cellules associées au paramètre maxCellsMeasHST pour permettre à l'UE de réduire une erreur de synchronisation dans un handover avec l'une du nombre de cellules.

9. Au moins un support de stockage lisible par machine sur lequel sont incorporées des instructions pour un équipement utilisateur, UE, fonctionnant dans un environnement de train à grande vitesse, HST, les instructions lorsqu'elles sont exécutées par un ou plusieurs processeurs au niveau de l'UE effectuent ce qui suit :

identifier l'UE configuré pour fonctionner dans un mode de contrôle de ressource radio connecté, RRC_Connected, dans l'environnement HST ;

identifier un nombre de cellules à mesurer dans le mode RRC_Connected tout en fonctionnant dans l'environnement HST comme un paramètre maxCellsMeasHST, dans lequel le paramètre maxCellsMeasHST est un paramètre de sous-ensemble de cellules maximales à mesurer, maxCellsMeas, et le sous-ensemble augmente une vitesse de détection de cellule au niveau de l'UE ; et

décoder le paramètre maxCellsMeasHST dans un accès radio terrestre universel évolué d'objet de mesure, MeasObjectEUTRA, reçu en provenance d'un nœud B évolué, eNB ; et

coder les une ou plusieurs mesures de qualité de canal dans un élément d'information EUTRA d'objet de mesure, MeasObjectEUTRA ;

dans lequel le MeasObjectEUTRA comprend : un paramètre d'indicateur d'identification de cellule HST, cellIDIndHST, exploitable pour indiquer une cellule cible que l'UE sélectionnera pour le handover, dans lequel le cellIDIndHST inclut un Booléen pour indiquer qu'une procédure de détection d'une identification, ID, de cellule cible sera sautée pour éliminer un temps utilisé pour rechercher un ID de cellule physique, PCID, de la cellule cible que l'UE sélectionnera pour le handover.

10. L'au moins un support de stockage lisible par machine selon la revendication 9, comprenant en outre des instructions qui, lorsqu'elles sont exécutées par un ou plusieurs processeurs au niveau de l'UE, effectuent ce qui suit : coder une ou plusieurs mesures de qualité de canal effectuées par l'UE, pour chacune du nombre de cellules.

11. L'au moins un support de stockage lisible par machine selon la revendication 9 ou 10, dans lequel les une ou plusieurs mesures de qualité de canal comprennent : une mesure de qualité de réception de signal de référence, RSRQ, une mesure de puissance de réception de signal de référence, RSRP, et une mesure de rapport signal sur interférence bruit de signal de référence, RS-SINR, et les une ou plusieurs mesures de qualité de canal sont effectuées dans une période de mesure de temps de cellules intra-fréquence, $T_{measurement\_Period\ Intra}$.

12. L'au moins un support de stockage lisible par machine selon la revendication 9 ou 10, dans lequel les un ou plusieurs processeurs sont en outre configurés pour : décoder une valeur de décalage de fréquence et une valeur de décalage de séquencement sur la base d'un déplacement Doppler estimé reçu dans l'élément d'information MeasObjectEUTRA pour chacune du nombre de cellules associées au paramètre maxCellsMeasHST pour réduire une erreur de synchronisation dans un handover avec l'une du nombre de cellules.

FIG. 1

FIG. 2

InactivityTimer

On Duration

On Duration

Short DRX Cycle

Short DRX Cycle

## FIG. 3a

HARQ RTT Timer

Retransmission Timer

Inactivity Timer

Opportunity for
DRX

On-Duration Timer

Long DRX Cycle

Long DRX Cycle

TTI where PDCCH is
successfully downloaded

## FIG. 3b

400

Identify the UE is operating in the HST environment 〜 410

Configure the UE in a radio resource control connected (RRC_Connected) mode 〜 420

Decode network assistant information for the UE operating in the HST environment , wherein the network assistant information includes: a number of cells to be measured in the RRC_Connected mode while operating in the HST environment in a maxCellsMeasHST parameter, wherein the maxCellsMeasHST parameter is a subset of a maximum cells to be measured (maxCellsMeas) and the measurement of the subset increases a cell detection speed at the UE 〜 430

FIG. 4

500 —

Identify a UE configured to operate in a radio
resource control connected (RRC_Connected)
mode in the HST environment
510

Encode, a maxCellsMeasHST parameter in a
measurement object evolved universal terrestrial
radio access (MeasObjectEUTRA) information
element for transmission to the UE, wherein the
maxCellsMeasHST parameter comprises a number
of cells to be measured, by the UE, in the
RRC_Connected mode while operating in the HST
environment and the parameter is a subset of the
maximum cells to be measured (maxCellsMeas)
and measurement of the subset increases a cell
detection speed at the UE
520

FIG. 5

600

Identify a UE configured to operate in a radio resource control connected (RRC_Connected) mode in the HST environment  610

Identify a number of cells to be measured in the RRC_Connected mode while operating in the HST environment as a maxCellsMeasHST parameter, wherein the maxCellsMeasHST parameter is a subset of a maximum cells to be measured (maxCellsMeas) and the subset increases a cell detection speed at the UE  620

Decode, the maxCellsMeasHST parameter in a measurement object evolved universal terrestrial radio access (MeasObjectEUTRA) received from an evolved Node B (eNB).  630

FIG. 6

=========*Text in TS36.331*=========================================

*MeasObjectEUTRA* information element

-- ASN1START

MeasObjectEUTRA ::=                    SEQUENCE {

  ...…

  -- Cell list

WhiteCellsToAddMod-r13 ::=SEQUENCE {
  cellIndex-r13                    INTEGER (1..maxCellMeas),


  physCellIdRange-r13                PhysCellIdRange
}

 ...

}

-- ASN1STOP

=========*end of Text in TS36.331*=================================

# FIG. 7

=========*Text in TS36.331*=============================

### *MeasObjectEUTRA* information element

```
-- ASN1START

MeasObjectEUTRA ::=              SEQUENCE {

    ......
    -- Cell list

    cellIDIndHST-r13                    boolean (true, fasle),

    physCellIdRange-r13                 PhysCellIdRange
}


...
}
cellIDIndHST-r13
to indicate the tarege cell ID. If yes, the cell detection
procedure could be skipped.
- ASN1STOP
```

# FIG. 8

| Case# | AWGN with875Hz offset, SINR= -6dB | | EVA-875Hz, SINR= -6dB | |
|---|---|---|---|---|
| | Cell ID unknown | Cell ID known | Cell ID unknown | Cell ID known |
| 1 | 2 | 1 | 9 | 2 |
| 2 | 2 | 1 | 9 | 2 |
| 3 | 2 | 1 | 9 | 2 |
| 4 | 3 | 1 | 5 | 2 |

# FIG. 9

===========*Text in TS36.331*=========================================

### *MeasObjectEUTRA* information element

```
-- ASN1START

MeasObjectEUTRA ::=                    SEQUENCE {

    ......
    -- Cell list


CellsToAddModList ::=                  SEQUENCE (SIZE
(1..maxCellMeas)) OF CellsToAddMod

CellsToAddMod ::= SEQUENCE {
    cellIndex                          INTEGER (1..maxCellMeas),
    physCellId                         PhysCellId,
    cellIndividualOffset               Q-OffsetRange
}

...
}

-- ASN1STOP
```

maxCellMeas for HST can be less than "nHSTMeasCell"

===========*end of Text in TS36.331*=========================================

# FIG. 10

FIG. 11

EP 3 437 372 B1

FIG. 12

EP 3 437 372 B1

Mobile
Device

Multiple
Antennas

Wireless
Modem

Non-Volatile
Memory Port

Speaker

Liquid Crystal Display
(LCD) Screen and/or
Touch Screen Display

Speaker

Application
Processor

Graphics
Processor

Storage
Medium

Internal
Memory

Keyboard

Microphone

FIG. 13

1400

Node 1410

Node Device
1412

1416

Transceiver
Module

Transceiver

Processor(s)

Memory

1414

Processing
Module

Processor(s)

Memory

Wireless
Device
1420

1422

Transceiver
Module

Transceiver

Processor(s)

Memory

1424

Processing
Module

Processor(s)

Memory

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140335865 A
- WO 2016004627 A
- US 20140146794 A
- GB 2493290 A

**Non-patent literature cited in the description**

- Discussion on enhancing RRM requirements for high speed scenario. *3GPP DRAFT; R4-160541,* 14 February 2016, ht-tp://www.3gpp.org/ftp/Meetings_3GPP_SYNC/RAN 4/Docs